(19) Europäisches Patentamt

European Patent Office

Office européen des brevets

(11) **EP 1 075 103 A1**

(12) **EUROPEAN PATENT APPLICATION**
published in accordance with Art. 158(3) EPC

(43) Date of publication:
07.02.2001 Bulletin 2001/06

(51) Int. Cl.⁷: **H04J 11/00**, H04L 29/06

(21) Application number: 00904064.3

(86) International application number:
PCT/JP00/00967

(22) Date of filing: 21.02.2000

(87) International publication number:
WO 00/49749 (24.08.2000 Gazette 2000/34)

(84) Designated Contracting States:
AT BE CH CY DE DK ES FI FR GB GR IE IT LI LU MC NL PT SE

(30) Priority: 19.02.1999 JP 4126199

(71) Applicant:
MITSUBISHI DENKI KABUSHIKI KAISHA
Tokyo 100-8310 (JP)

(72) Inventors:
• KATO, Masataka,
Mitsubishi Denki K.K.
Tokyo 100-8310 (JP)
• MATSUMOTO, Wataru,
Mitsubishi Denki K.K.
Tokyo 100-8310 (JP)
• KOBAYASHI, Tsuyoshi,
Mitsubishi Denki K.K.
Tokyo 100-8310 (JP)

• ANDO, Yasuomi,
Mitsubishi Denki Kabushiki Kaisha
Tokyo 100-8310 (JP)
• KOIZUMI, Yoshiaki,
Mitsubishi Denki K.K.
Tokyo 100-8310 (JP)
• HIGUMA, Toshiyasu,
Mitsubishi Denki K.K.
Tokyo 100-8310 (JP)
• INOUE, Masahiro,
Mitsubishi Denki Kabushiki Kaisha
Tokyo 100-8310 (JP)

(74) Representative:
Pfenning, Meinig & Partner GbR
Mozartstrasse 17
80336 München (DE)

(54) **COMMUNICATION DEVICE AND COMMUNICATION METHOD**

(57) A concept of a virtual master is used in replacing a primary modulation/demodulation system between existing power line modems which are connected on the same power line. More specifically, a power line modem among a plurality of power line modems connected on a power line which has been determined to be "difficult to maintain communications quality communications in the present primary modulation system" becomes the virtual master in primary modulation system replacement processing. Such a virtual master transmits a replacement request command specifying the next primary modulation system to the other power line modems. Then, when there has been no response of a replacement refusal command from the power line modems which received the replacement request command, the virtual master replaces the primary modulation system with the next primary modulation system and transmits a replacement specification command to the other power line modems . Finally, the other power line modems which have received the replacement specification command replace the primary modulation system which they are presently using with the specification primary modulation system.

FIG.7

## Description

TECHNICAL FIELD

This invention relates to a communications apparatus and a communications method which utilize a multicarrier modulation/demodulation system, and more particularly relates to the communications apparatus and the communications method which are capable of realizing data communications using existing power lines by means of a DMT (Discrete Multi Tone) modulation/demodulation system, an OFDM (Orthogonal Frequency division multiplex) modulation/demodulation system, a CAP (Carrier-less Amplitude Phase) modulation/demodulation system, or a PAM (pulse amplitude modulation) modulation/demodulation system and the like. However, this invention is not limited to a communications apparatus which carries out power line communications, and can be applied in all communications apparatuses which carry out wired communications via ordinary communications cables and radio communications.

BACKGROUND ART

Below, a conventional communications method will be explained. In recent years, from the point of view of having high noise tolerance and the like, there have started to be proposed a variety of multicarrier communications methods which perform communications by modulating a multicarrier (tone) to data by using a DMT (Discrete Multi Tone) modulation/demodulation system and the like. In such a multicarrier communications method, a transmitting side (modulating side) normally uses a primary modulator to divide data and convert the frequency. Thereafter, the data after the primary modulation is multicarrier-modulated by using a secondary modulator comprising a dispersed tone modulator such as an IFFT. Finally, the multicarrier data after the secondary modulation is transmitted.

However, in this type of conventional multicarrier communications system, since the primary modulator has only one type of modulation system, an environment where the effects of noise are considerable can be dealt with only by processing for transmitting identical data on multiple carriers (tones), processing for replacing/selecting carriers, and the like. The problem has been that these processes can only maintain a fixed level of communications quality.

Particularly, in a communications environment such as in-vehicle communications in-train communications between a power line modem, an electronic devices which is mounted in a vehicle, a navigation device, a vehicle-mounted computer, an ITS communications apparatus, and the like, the noise levels of the other devices are considerable and the range of the noise is wide and fluctuates, severely worsening the communications environment. For this reason, there is a demand for noise countermeasures to keep the communications quality above a fixed level when utilizing the above-mentioned multicarrier communications system.

Accordingly, the present invention has been devised based on the above, and aims to provide a communications apparatus and a communications method which can keep communications quality above a fixed level even in an environment where the effects of noise are considerable.

DISCLOSURE OF THE INVENTION

The communications apparatus according to the present invention carries out data communications with other communications apparatuses connected on the same transmission path by using a multicarrier modulation/demodulation system, comprises a constitution which can be modulated/demodulated to a plurality of primary modulation/demodulation systems and is characterized in that when requesting a replacement of a primary modulation/demodulation system which is presently being used, the communications apparatus transmits a replacement request command specifying the next primary modulation/demodulation system which is different to the system being used to all communications apparatuses which are connected on the same transmission path; and thereafter, when no replacement refusal command has been received from any of the communications apparatuses within a predetermined period of time, the communications apparatus replaces its primary modulation/demodulation system with said next primary modulation/demodulation system, and moreover, transmits a replacement specification command to all said communications apparatuses, whereby the primary modulation/demodulation systems set in all said communications apparatuses are replaced by said next primary modulation/demodulation system.

According to this invention. In a plurality of communications apparatuses which are connected on the same transmission path and performing communications, a communications apparatus which requests to replace the primary modulation/demodulation system transmits a request to replace the primary modulation/demodulation system which is presently being used to all the other communications apparatuses. In the case where no response of a replacement refusal command is received from any of the communications apparatuses, it replaces the primary modulation/demodulation system. As a consequence, the primary modulation/demodulation system can be replaced reliably based on the opinions of all the all communications apparatuses.

In the communications apparatus according to the next invention, a communications apparatus for carrying out data communications with other communications apparatuses connected on the same transmission path by using a multicarrier modulation/demodulation system comprises a constitution which can be modulated/demodulated to a plurality of primary modulation/demodulation systems, and is characterized in that when a replacement specification command specifying the next primary modulation/demodulation system which is different from the system presently being used has been received from said other communications apparatuses in a predetermined period of time, the communications apparatus replaces its primary modulation/demodulation system with said next primary modulation/demodulation system.

According to this invention, when it is determined that all the communications apparatuses which received the replacement request command "have not refused to replace the primary modulation/demodulation system" and a replacement specification command has been received from the communications apparatus which transmitted the replacement request, it is determined that "all the communications apparatuses have agreed to replace the primary modulation/demodulation system", and the primary modulation system presently being used is replaced by the primary modulation system specified in the replacement specification command. As a consequence, the primary modulation/demodulation system can be replaced reliably based on the opinions of all the communications apparatuses.

A communications method according to the next invention is characterized in that a communications apparatus on the transmitting side primary modulates input data, creates a multicarrier by sequentially executing multicarrier modulation, and thereafter transmits said multicarrier data on a transmission path. On the other hand, a communications apparatus on the receiving side sequentially executes multicarrier demodulation and primary demodulation of the received multicarrier data, thereby demodulating said original input data. A communications apparatus which wishes to replace its primary modulation/demodulation system replaces the primary modulation/demodulation system which is presently being used with another primary modulation/demodulation system in linkage with other communications apparatuses which are connected on the same transmission path, and thereafter carries out primary modulation/demodulation by using the post-replacement primary modulation/demodulation system.

According to this invention, the communications apparatuses connected on the same transmission path link together and replace the primary modulation/demodulation system which is presently being used with another primary modulation/demodulation system, thereby enabling data communications to be always carried out using the best primary modulation/demodulation system. Therefore, a fixed level of communications quality can be maintained even in an environment where there is a considerable effect of noise.

In the communications method according to the next invention, a communications apparatus which wishes to replace said primary modulation/demodulation system transmits a replacement request command specifying the next primary modulation/demodulation system which is different to the system being used to all communications apparatuses which are connected on the same transmission path; and thereafter, when no replacement refusal command has been received from any of the communications apparatuses within a predetermined period of time, the communications apparatus replaces its primary modulation/demodulation system with said next primary modulation/demodulation system, and moreover, transmits a replacement specification command to all said communications apparatuses, whereby the primary modulation/demodulation systems set in all said communications apparatuses are replaced by said next primary modulation/demodulation system.

According to this invention, in a plurality of communications apparatuses performing communications which are connected on the same transmission path, a communications apparatus which requests a replacement of the primary modulation/demodulation system transmits a replacement request command to replace the present next primary modulation/demodulation system to all the other communications apparatuses. When no replacement refusal command is received from any of the communications apparatuses, the communications apparatus replaces its primary modulation/demodulation system. As a consequence, the primary modulation/demodulation system can be replaced reliably based on the opinions of all the communications apparatuses.

In the communications method according to the next invention, the variety of commands are stored in a field in a transmitted frame which is checked by all said communications apparatuses.

According to this invention, the commands stored in the frame are received by all communications apparatuses which are operating normally. As a consequence, the communications apparatuses which received the commands can easily execute processing in response to those commands.

In the communications method according to the next invention, a communications apparatus which wishes to replace its primary modulation/demodulation system transmits a replacement request command specifying the next primary modulation/demodulation system which is different to the system being used to all communications apparatuses which are connected on the same transmission path; determines whether there is a response from other communications apparatuses, and where no replacement refusal command has been received from any of the communications apparatuses within said predetermined period of time, resets said timer and thereafter repeatedly executes said determination processing and timer reset processing a predetermined number of times. When no replacement refusal command has been received from any of the communications apparatuses in this state, the communications apparatus replaces its primary modulation/demodulation system with said next primary modulation/demodulation system, and transmits a replacement specification command to all said communications apparatuses, whereby the primary modulation/demodulation systems set in all said communications apparatuses are replaced by said next primary modulation/demodulation system.

According to this invention, it is envisaged that the replacement request and replacement refusal commands cannot be transmitted and received in a single transmission. These commands are transmitted a plurality of times, making the replacement processing more reliable. Consequently, it is possible to provide a robust power communications system even in an environment which is susceptible to the effects of noise.

In the communications method according to the next invention, said variety of commands are stored in a field in a transmitted frame which is checked by all said communications apparatuses.

According to this invention, the commands stored in the frame are received by all communications apparatuses which are operating normally. As a consequence, the communications apparatuses which received the commands can easily execute processing in response to those commands.

In the communications method according to the next invention, a case when said communications apparatus wishes to replace its primary modulation/demodulation system is a case when the S/N ratio of said multicarrier data has deteriorated such that a fixed level of communications quality cannot be maintained without difficulty.

According to this invention, the primary modulation/demodulation system is replaced when the S/N ratio of said multicarrier data has deteriorated such that a fixed level of communications quality cannot be maintained without difficulty. Consequently, the noise tolerance can be increased and a predetermined communications quality can be maintained with the present S/N ratio.

In the communications method according to the next invention, when the S/N ratio of said multicarrier data has improved, enabling the fixed level of communications quality to be maintained, the communications apparatus links with the other communications apparatuses connected on the same transmission path and returns the primary modulation/demodulation system presently being used sequentially to the original primary modulation/demodulation system.

According to this invention, when the S/N ratio of said multicarrier data has improved, the present primary modulation system is sequentially replaced with the original primary modulation/demodulation system. Consequently, the transmission speed between the communications apparatuses can be increased.

In the communications method according to the next invention, a case when said communications apparatus wishes to replace its primary modulation/demodulation system is a case when, in spite of the fact that the carrier used to transmit and receive said multicarrier data has been shifted to the optimum frequency band, the S/N ratio of said multicarrier data has deteriorated such that a fixed level of communications quality cannot be maintained without difficulty.

According to this invention, the tone groups and set positions are firstly replaced and thereafter multicarrier communications is performed at the replacement destination tone. The primary modulation/demodulation system is replaced only when the effects of noise has the result that a fixed level of communications quality cannot be maintained without difficulty in spite of the above replacement. Consequently, the replacement of the primary modulation/demodulation system which has a large processing load can be made unnecessary when a fixed level of communications quality can be maintained merely by replacing the tone groups and set positions.

In the communications method according to the next invention, when the S/N ratio of said multicarrier data has improved, enabling the fixed level of communications quality to be maintained, the communications apparatus links with the other communications apparatuses connected on the same transmission path and returns the primary modulation/demodulation system presently being used sequentially to the original primary modulation/demodulation system.

According to this invention, when the S/N ratio of said multicarrier data has improved, the present primary modulation system is sequentially replaced with the original primary modulation/demodulation system. Consequently, the transmission speed between the communications apparatuses can be increased.

In the communications method according to the next invention, a case where there is a wish to replace said primary modulation/demodulation system is a case when existing communications apparatuses and a communications apparatus which has been newly connected on the same transmission path as said communications apparatuses starts multicarrier communications.

According to this invention, a newly connected communications apparatus transmits an inquiry about the primary modulation system presently being used by using the default primary modulation system. Consequently, the newly connected communications apparatus can easily replace to the primary modulation system presently being used. Therefore, normal communications with the existing communications apparatuses can be achieved more rapidly.

In the communications method according to the next invention, all communications apparatuses use time diversity for chronologically repeatedly primary modulating identical multicarrier data as the primary modulation/demodulation system.

According to this invention, for example, identical phase shift modulation of a DBPSK modulation system is repeated three times. Furthermore, the primary modulation system is sequentially replaced in the sequence of DQPSK DBPSK (DBPSK + time diversity) as the method used for time diversity. Consequently, the noise tolerance can be sequentially increased and the desired communications quality can be maintained at all times.

BRIEF DESCRIPTION OF THE DRAWINGS

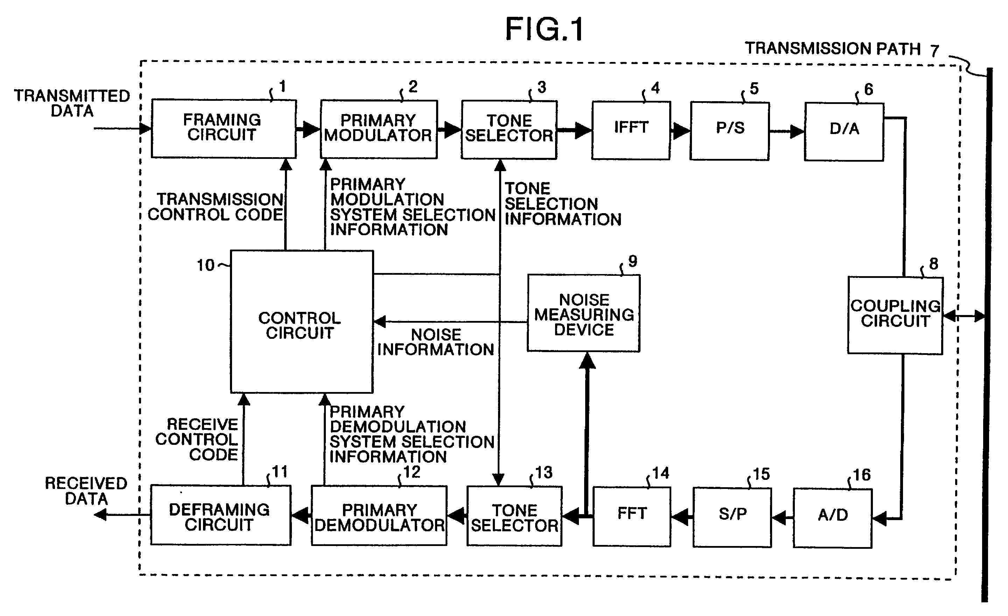

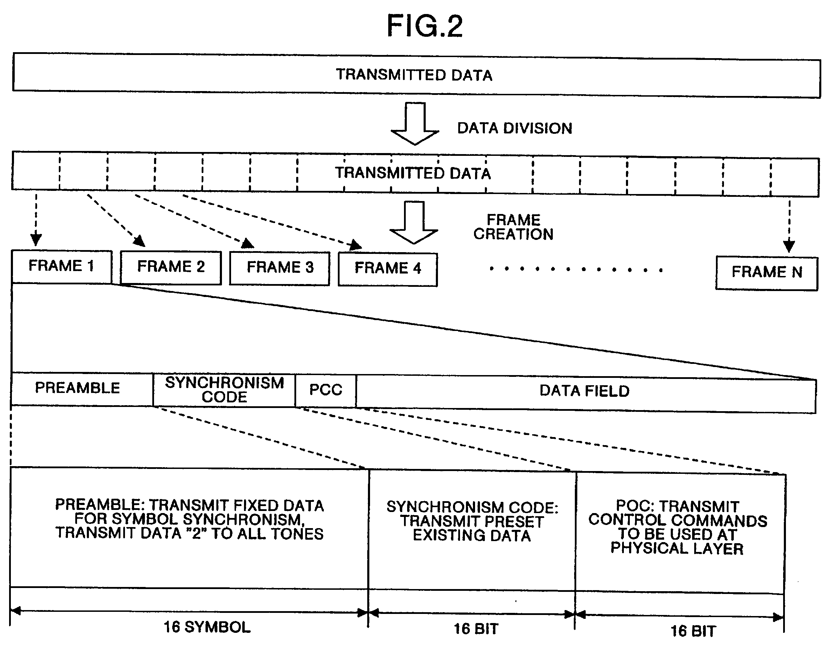

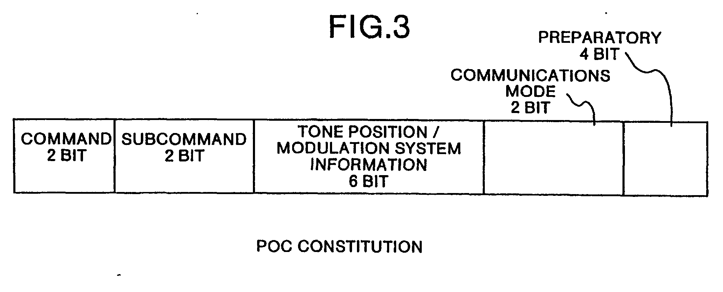

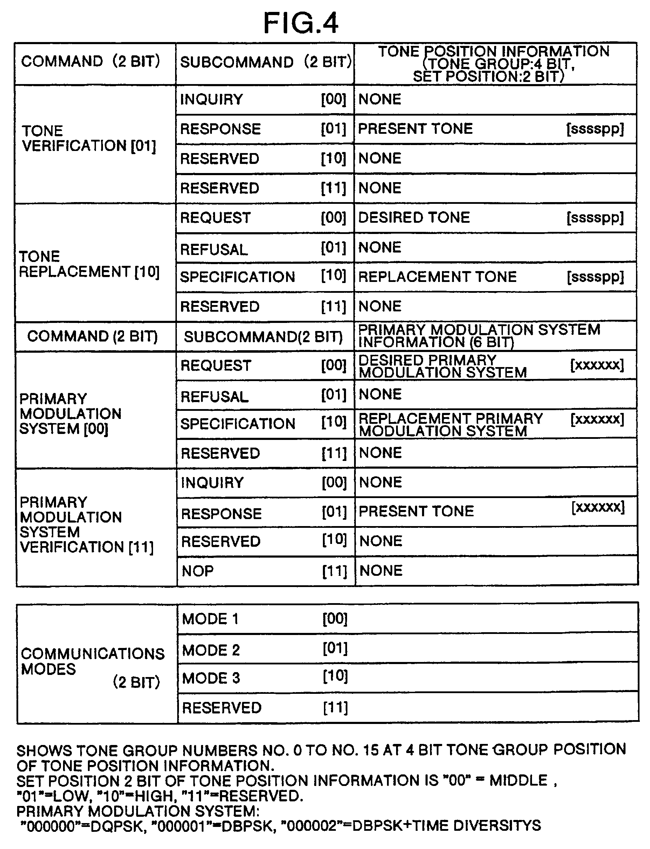

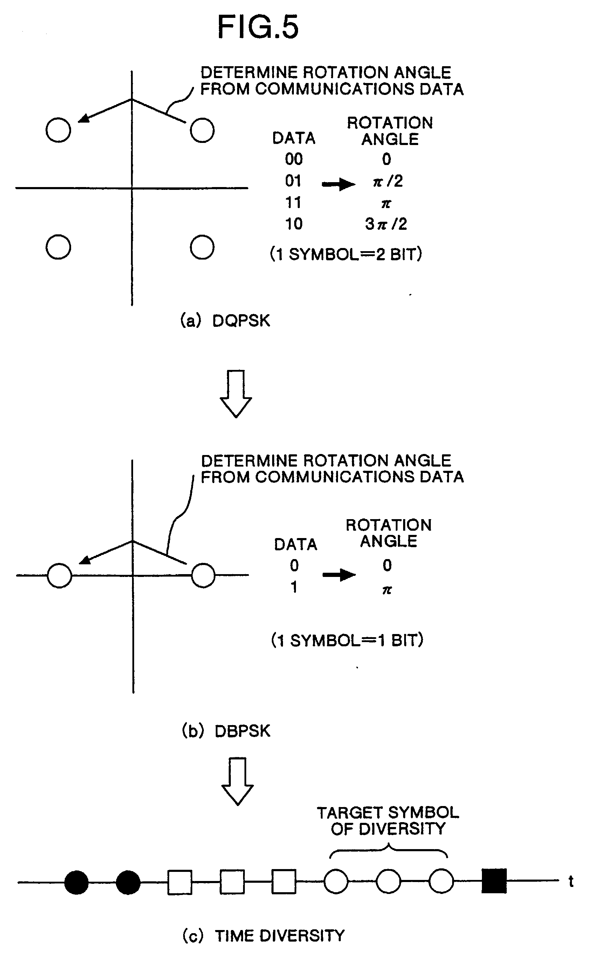

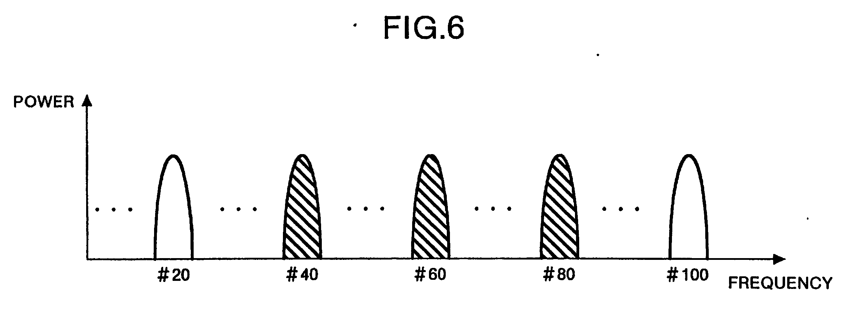

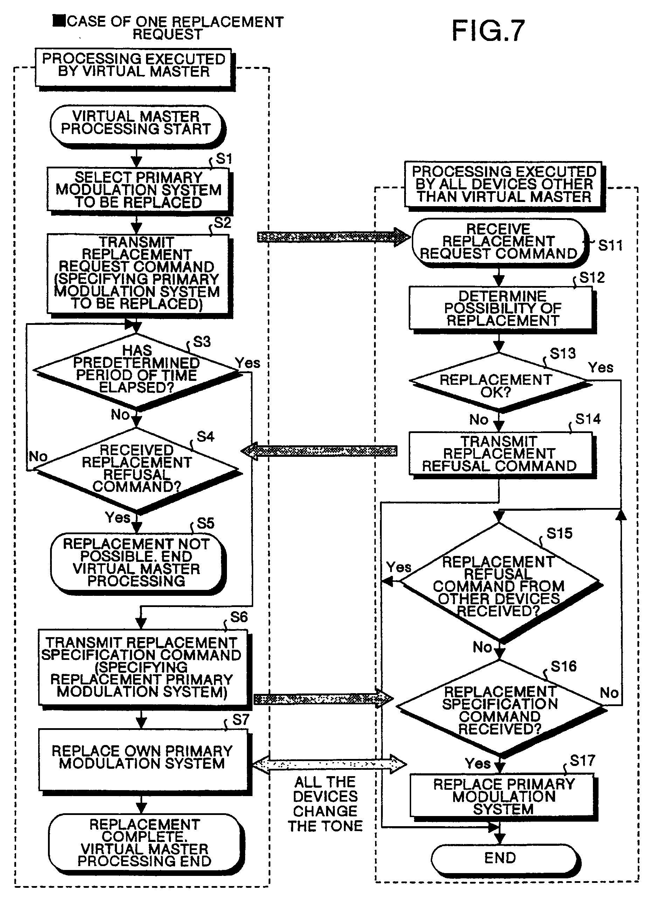

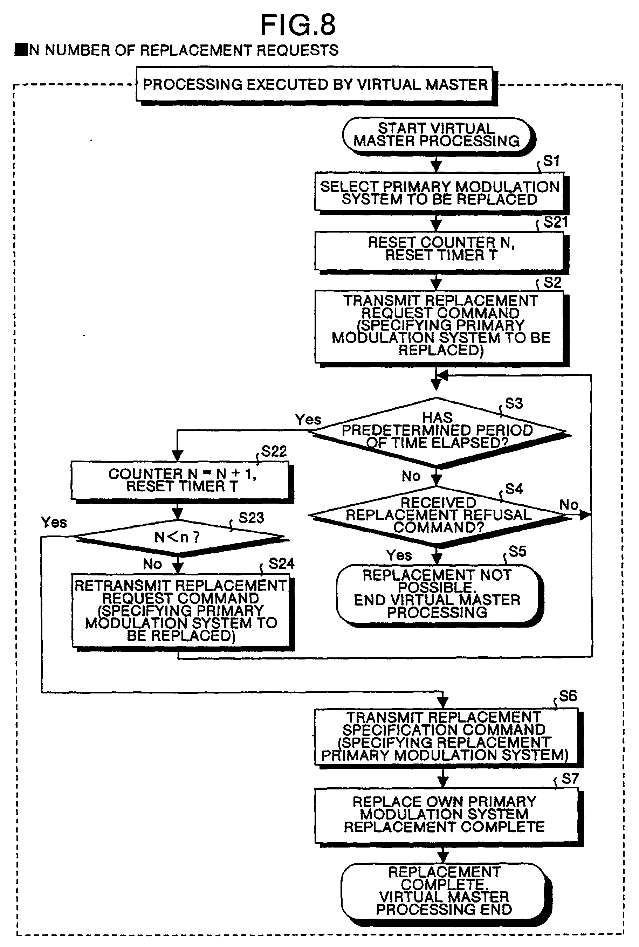

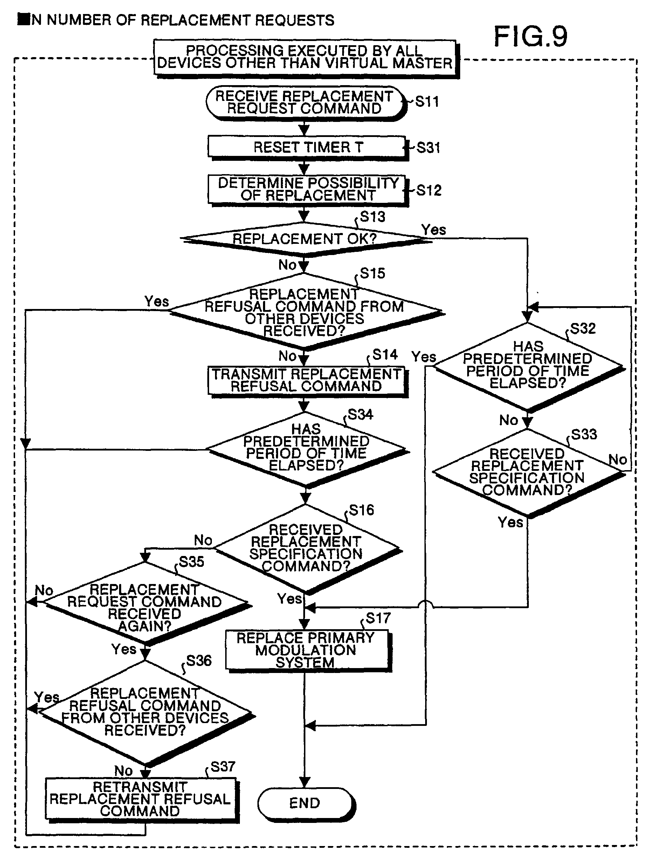

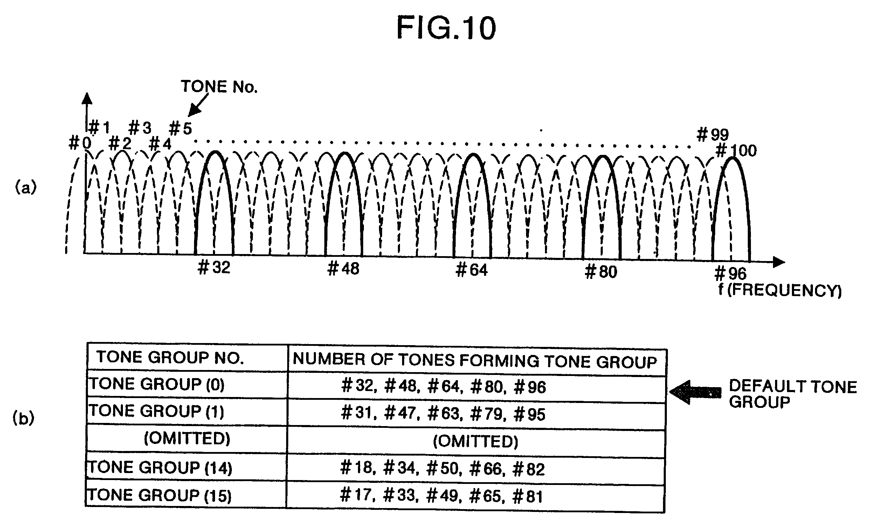

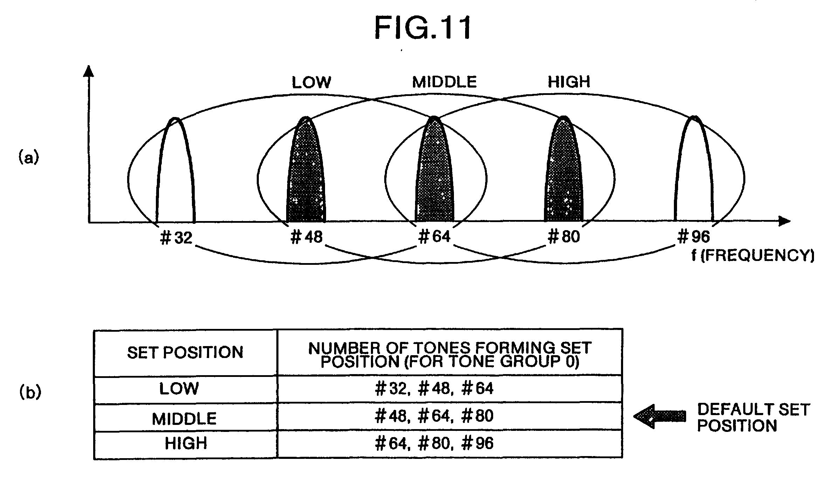

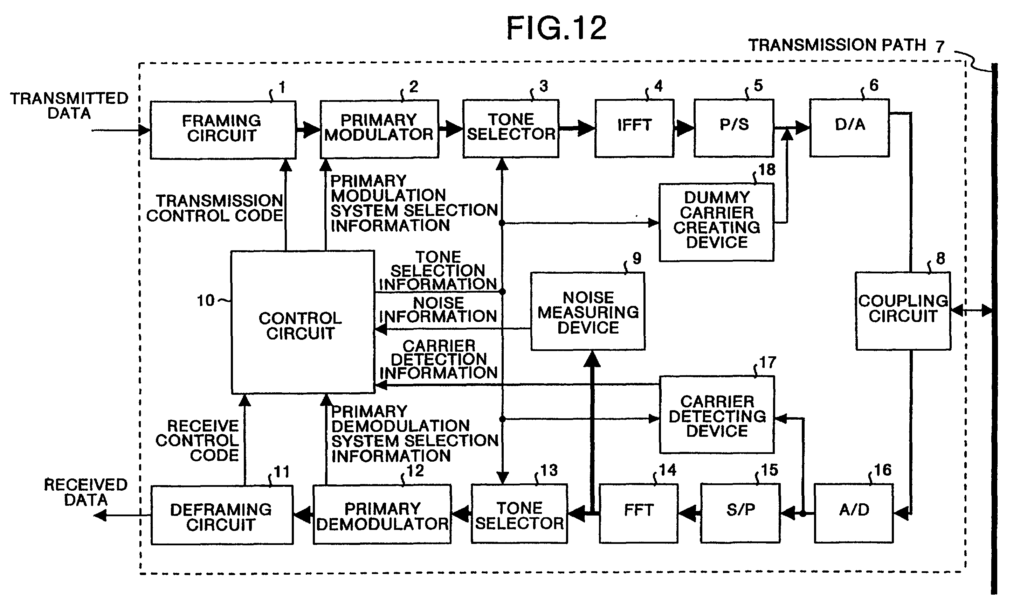

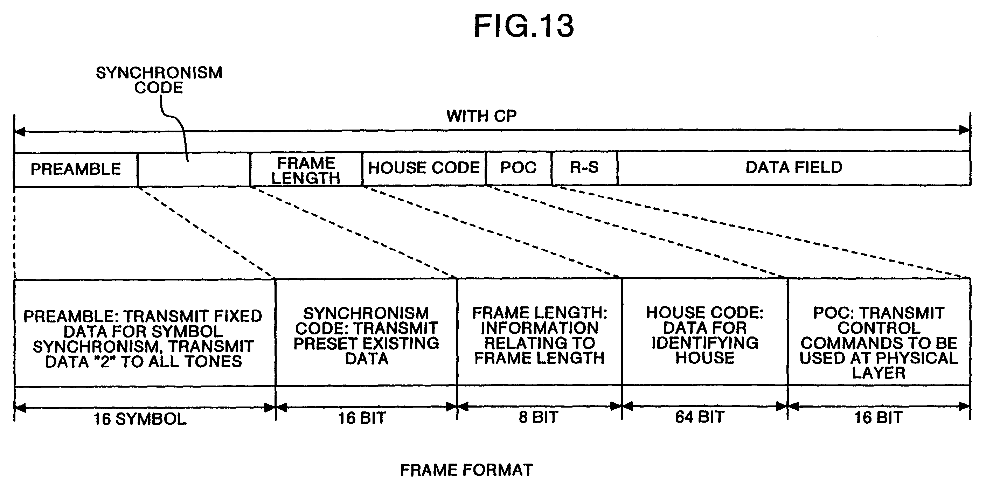

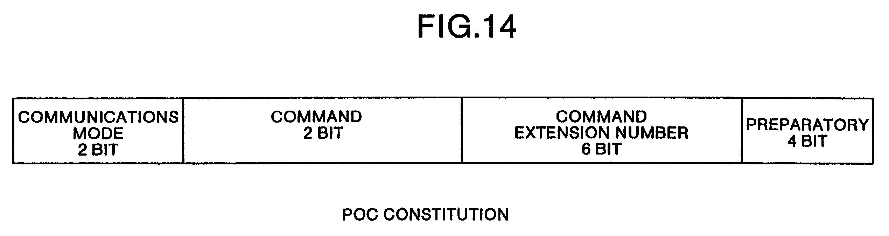

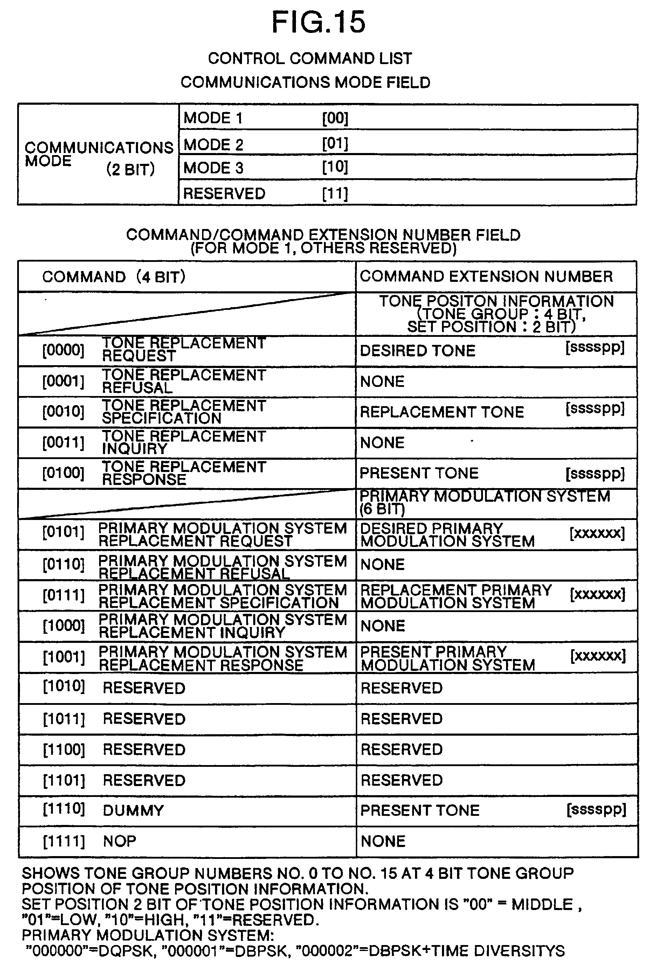

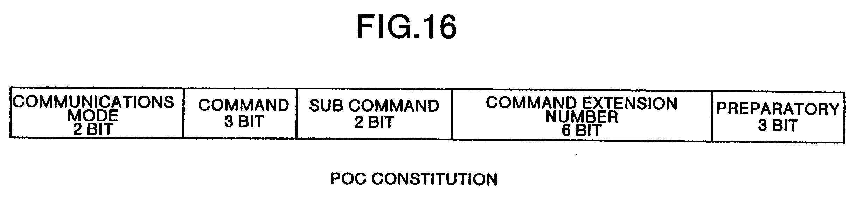

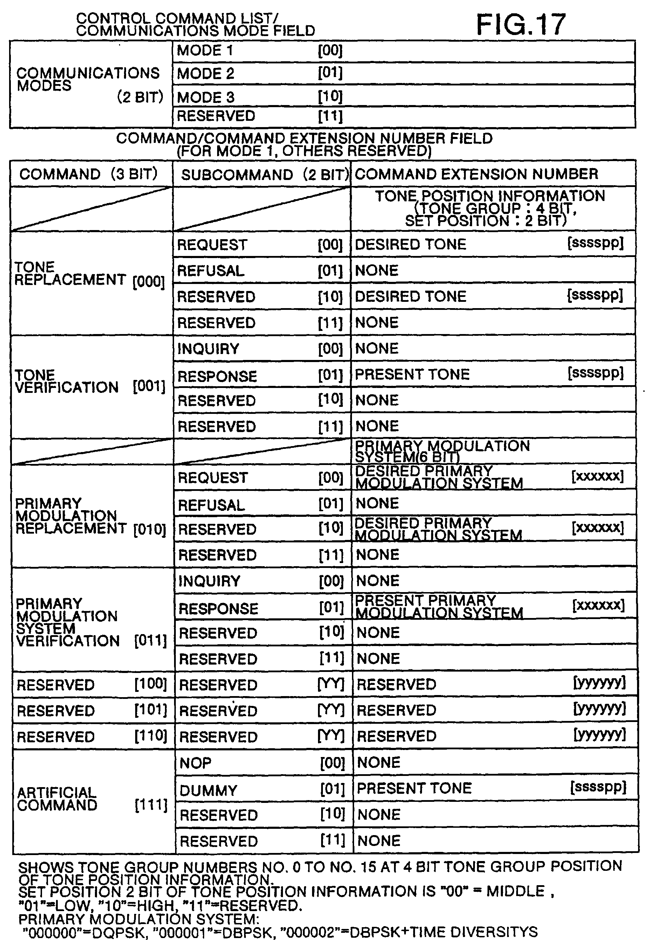

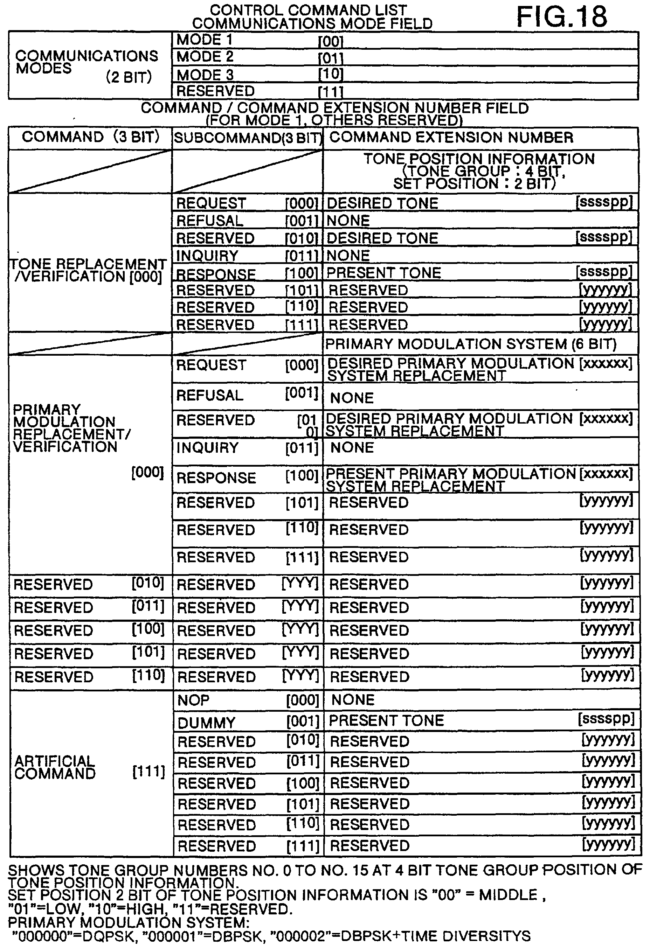

Fig. 1 is a diagram showing the constitution of a first embodiment of the communications apparatus according to the present invention; Fig. 2 is a diagram showing the frame constitution after framing processing executed in a framing circuit 1; Fig. 3 is a diagram showing the constitution of a POC in the first embodiment; Fig. 4 is a diagram showing a list of contents of control commands in the POC; Fig. 5 is a diagram showing specific examples of a primary modulation/demodulation system utilized in the embodiment; Fig. 6 is a diagram showing one example of a used tone which is selected by tone selectors 3 and 31; Fig. 7 is a flowchart showing processing contents of a power line modem acting as a virtual master and a power line modem other than the virtual master; Fig. 8 is a flowchart showing processing contents of a second embodiment using a virtual master; Fig. 9 is a flowchart showing processing contents of a second embodiment using a power line modem other than a virtual master; Fig. 10 is a diagram showing one example of a tone group which the power line modem of the second embodiment uses in communications; Fig. 11 is a diagram showing a set position combination which a control circuit 10 prepares beforehand; Fig. 12 is a diagram showing the constitution of a third embodiment of the communications apparatus according to the present invention; Fig. 13 is a diagram showing the constitution of a frame in a fourth embodiment; Fig. 14 is a diagram showing the constitution of a POC in a fifth embodiment; Fig. 15 is a diagram showing a list of contents of control commands in the POC; Fig. 16 is a diagram showing the constitution of a POC in a sixth embodiment; Fig. 17 is a diagram showing a list of contents of control commands in the POC of the sixth embodiment; and Fig. 18 is a diagram showing a list of contents of control commands in the POC in a seventh embodiment.

BEST MODE FOR CARRYING OUT THE INVENTION

The present invention will be explained in greater detail with reference to the accompanying diagrams.

Firstly, the constitution of the communications apparatus according to the present invention will be explained. The communications apparatus according to the present invention keeps the communications quality above a fixed level by making it possible to select different primary modulation/demodulation systems having noise-tolerance based on the S/N ratio of a received signal. Furthermore, multiple communications apparatuses can be connected on a transmission path such as a power line to be linked to other communications apparatuses and the communications carrier can be replaced in a single operation and reliably. In addition, when the carrier is replaced, a carrier which is newly connected thereafter can reliably adhere to the primary modulation/demodulation system and the carrier replacement. "Carrier" can also be termed "tone."

Below, as an example of the communications apparatus according to the present invention, for example, a power line modem (hereinafter sometimes abbreviated as "the device") which performs communications by using an existing power line will be explained. Fig. 1 is a diagram showing the constitution of the communications apparatus according to the present invention, that is, the power line modem.

In Fig. 1, 1 represents a framing circuit, 2 represents a primary modulator, 3 represents a tone selector, 4 represents an inverse Fourier conversion circuit (IFFT), 5 represents a parallel/serial conversion circuit (P/S), 6 represents a digital/analog conversion circuit (D/A), and these form the transmitting system of the power line modem.

Furthermore, 7 represents a power line, 8 represents a coupling circuit, 9 represents a noise measurement device, 10 represents a control circuit which controls the primary modulation/demodulation system, tone group, and set position control. The control circuit 10 in the embodiment does not control the tone group and set position, but only controls the primary modulation/demodulation system.

Furthermore, in Fig. 1, 11 represents a deframing circuit, 12 represents a primary modulator which carries out demodulation in reverse to that of the primary modulator 2, 13 represents a tone selector, 14 represents a Fourier conversion circuit (FFT), 15 represents a serial/parallel conversion circuit (S/P), 16 represents an analog/digital conversion circuit (A/D), and these form the receiving system of the power line modem.

The above-described power line modem connects to various devices (not shown in the diagram) for sending transmission data and receive data via the power line. For example, multiple power line modems having the same constitution as the power line modem are connected to the power line 7, and the multiple power line modems individually send communications via the power line.

Fig. 2 is a diagram showing the frame constitution after the framing processing executed in the framing circuit 1. As shown in Fig. 2, the framing circuit 1 firstly divides the transmission data into a plurality of bit rows, and creates a frame comprising a 32-bit preamble carrying data for measuring noise and fixed data for symbol synchronism (e.g. allocating data "2" to all the tones), a 16-bit synchronism code carrying pre-known data for establishing synchronism and a 16-bit POC (Power line communication Overhead Control field) carrying control commands used at the physical layer from the data. That is, when viewed at the physical layer level, the control commands stored in the POC are received by all the power line modems which are operating regularly. The power line modems which have received the control commands understand the contents thereof and respond when necessary. Here, frames 1 to N are created from the transmission data.

Fig. 3 is a diagram showing the constitution of the above POC. The POC is used for transmitting replacement request/replacement specification commands/replacement refusal commands and the like relating to the primary modulation/demodulation system. Therefore, the POC for example comprises a 2-bit command, a 2-bit subcommand, a 6-bit tone position information, a 6-bit primary modulation/demodulation system information, a 2-bit communications mode and a 4-bit preparatory mode, a total of sixteen bits. The control commands in the POC are added to the transmission frames with the data by means of framing processing and deframing processing, and then are separated and extracted from the transmission frame on the receiving side.

Fig. 4 is a diagram showing a list of the contents of the control commands in the POC. More specifically, for example, the tone verification command "01" is used in a verification operation of the communications tone in a device which is newly connected to the power line. By appending the 2-bit subcommand, the tone verification command expresses a tone verification inquiry command "0100" and the tone verification response command "0101". For example, in the case of the tone verification response command "0101", the tone which is presently being used is appended as the tone position information.

The tone replacement command "10" is used when replacing the tone of the existing power line modem. By appending the 2-bit subcommand, the tone replacement command expresses a tone replacement request command "1000", a tone replacement refusal command "1001", or a tone replacement specification command "1010". For example, in the case of the tone replacement request command "1000", the desired destination tone is appended as the tone position information. In the case of the tone replacement specification command "1010", the replacement destination tone is appended.

Furthermore, the primary modulation/demodulation system replacement command "00" is used when a pre-existing power line modem replaces its primary modulation/demodulation system. By appending the 2-bit subcommand, the primary modulation/demodulation system replacement command expresses the primary modulation/demodulation system replacement request command "0000", the primary modulation/demodulation system replacement refusal command "0001", or the primary modulation/ demodulation system replacement specification command "0010". Then, for example, in the case of the primary modulation/demodulation system replacement request command "0000" or the primary modulation/demodulation system replacement specification command "0010", the desired destination primary modulation/demodulation system is appended as the primary modulation/demodulation system information. In the case of the primary modulation/demodulation system replacement specification command "0010", the replacement destination primary modulation/demodulation system is appended as the primary modulation/demodulation system information. Furthermore, for example, a primary modulation/demodulation system information of "000000" expresses a DQPSK modulation system, "000001" expresses a DBPSK modulation system, and "000010" expresses joint use of the DBPSK and time diversity.

Furthermore, the primary modulation/demodulation system verification other command having a command of "11" is used in verification processing when the existing power line modem has replaced the primary modulation/demodulation system. By appending the 2-bit subcommand, the primary modulation/demodulation system verification other command expresses a primary modulation/demodulation system replacement verification inquiry command "1100", a primary modulation/demodulation system verification response command "1101" and an NOP command "1111" which shows that there are no commands in the POC. Then, for example, in the case of the primary modulation/demodulation system verification response command "1101", the presently used primary modulation/demodulation system is added as the primary modulation/demodulation system information.

On the other hand, the communications modes shown in Fig. 4 are used as identification information to maintain mutual connectivity between power line communications operating at different communications speeds. Here, for example, mode 1 "00" expresses a high-speed mode, mode 2 "01" expresses a middle-speed mode, and mode 3 "11" expresses a low-speed mode. Normally, one of the transmitting side and the receiving side sends communications in a slower mode.

Fig. 5 is a diagram showing specific examples of primary modulation/demodulation systems utilized in the embodiment. Firstly, Fig. 5(a) is a DQPSK (Differential Quadrature Phase Shift Keying) modulation system which the primary modulator 2 uses as the default primary modulation/demodulation system. The DQPSK modulation system is a primary modulation/demodulation system which phase shift modulates one symbol of 2-bit data at four phase rotation angles. For example, data "00" is converted to rotation angle "0", data "01" is converted to rotation angle "π/2", data "11" is converted to rotation angle "π" and data "10" is converted to rotation angle "3π/2".

Subsequently, Fig. 5(b) is a DBPSK (Differential Binary Phase Shift Keying) modulation system which is used as a primary modulation/demodulation system set when executing replacement processing of the DQPSK modulation system. The DBPSK modulation system is a primary modulation/demodulation system which phase shift modulates one symbol of 1-bit data to two phase rotation angles. For example, data "0" is converted to rotation angle "0" and data "1" is converted to rotation angle "π".

Finally, Fig. 5(c) is a DBPSK (DBPSK + time diversity) modulation system which is used as a primary modulation/demodulation system set when executing replacement processing of the DBPSK modulation system. Here, to perform time diversity, a same phase shift modulation signal of the DBPSK modulation system is repeatedly output three times. The processing for repeatedly outputting the same phase shift modulation signal of the DBPSK modulation system three times may, for example, be achieved by repeatedly outputting the same phase shift modulation signal of the DBPSK modulation system three times, or the phase shift modulation signal of the DBPSK modulation system may be output only once from the transmitting side and the same phase shift modulation signal of the DBPSK modulation system held by the buffer on the receiving side may be output repeatedly three times.

In the primary modulator 2 and primary demodulator 12 of this embodiment, the primary modulation/demodulation system is replaced in the order DQPSK DBPSK (DBPSK + time diversity) based on the primary modulation/demodulation system selection information (created based on the S/N ratio of the received signal) from the control circuit 10. In this embodiment, the desired communications quality is maintained at all times by improving noise tolerance in this order. When the S/N ratio has been improved, the primary modulator 2 and the primary demodulator 12 replace the primary modulation/demodulation system in the opposite direction of (DBPSK + time diversity) DBPSK DQPSK based on the primary modulation/demodulation system selection information from the control circuit 10, thereby increasing the transmission speed.

Fig. 6 is a diagram showing one example of used tones set positions (selected from a usable tone group: three tones) which are selected by the tone selectors 3 and 13 in this embodiment. In this embodiment, as the multicarrier, in order to maintain compatibility with the other power line modems which are carrying out communications using the tones #0 to #100, a "disperse multicarrier tone" for coding identical or different data is executed to multiple tones at predetermined intervals. That is, the primary modulator 2 and the primary demodulator 12 of this embodiment modulate and demodulate a tone group comprising tones #20. #40, #60, #80 and #100 at twenty-tone intervals, and the tone selectors 3 and 13 select set positions of three tones from among the tone group.

"Set positions" denotes a number (for sake of convenience, three in the present embodiment) n (m > n ≧ a natural number of two or more) of tones which are selected from a number (for sake of convenience, five in the present embodiment) m (m ≧ a natural number of three or more) of tones which comprise the tone group, and for example refers to a combination of frequency bands (tones) for transferring coded data. However, at default, as shown in Fig. 6, the tones #40, #60 and #80 are selected from the tone group comprising the tones #20, #40, #60, #80 and #100, and communications are carried out in this position. Furthermore, replacing the tone groups and set positions will not be explained in this embodiment or the subsequently described second embodiment.

Subsequently, the communications operation of the power line modem in this embodiment will be explained based on Fig. 1. Firstly, the operation from the transmitting system will be explained. For example, when the power line modem receives transmitted data from a data processing apparatus (not shown in the diagram: corresponds to an electrical product which the power line modem is mounted on), as shown in Fig. 2, the framing circuit 1 carries out framing processing and outputs the processed result (frame) to the primary modulator 2. The primary modulator 2 modulates the frame which has been framing processed by the framing circuit 1 with the primary modulation/demodulation system described in the primary modulation/demodulation selection information from control circuit 10. Thereafter, the primary modulator 2 codes the same frame at each tone of the multicarrier (Discrete Multi Tone) modulation system and outputs the coded result to the tone selector 3. At default, the control circuit 10 outputs the primary modulation/demodulation selection information so that the DQPSK modulation system is used. Furthermore, the primary modulator 2 codes the same frame at all the tones #20, #40, #60, #80 and #100 which comprise the tone group.

Based on the primary modulation/demodulation selection information, the tone selector 3 selects, for example, the tones #40, #60 and #80 from the tone group and outputs these three tones to the inverse Fourier conversion circuit 4.

The inverse Fourier conversion circuit 4 performs inverse Fourier conversion IFFT to the data coded at the tones #40, #60 and #80, thereby converting frequency axis data to time axis data, and outputs the time axis data to the parallel/serial conversion circuit 5.

The parallel/serial conversion circuit 5 converts the parallel data output from the inverse Fourier conversion circuit 4 as time axis data to serial data, and outputs the serial data to the digital/analog conversion circuit 6.

Finally, the digital/analog conversion circuit 6 performs digital/analog conversion to the received serial data, and transmits this analog data on the power line 7 via the coupling circuit 8. As a result, identical multicarrier data coded at three tones at intervals of twenty tones is output on the power line 7 as shown in Fig. 6.

As a consequence, even when noise from the various devices connected to the power line 7 is concentrated in a specific frequency band, the power line modem at the receiving side can avoid the specific frequency band which is liable to be effected by the noise by the amount dispersed at the twenty tone intervals. Therefore, it is possible to transmit data which is robust against power line noise.

Subsequently, the operation of the receiving system of the power line modem according to this invention will be explained. In Fig. 1, only one power line modem is mounted on the power line 7 for the sake of convenient explanation. The operation of the receiving system will be explained using this power line modem. For example, when the coupling circuit 8 has received the multicarrier (three tones) sent from the power line modem on the transmitting side, firstly, the analog/digital conversion circuit 16 performs analog/digital conversion to the received analog data, and thereafter outputs the converted digital data to the serial/parallel conversion circuit 15.

The serial/parallel conversion circuit 15 converts the serial data received as digital data to parallel data, and outputs the parallel data to the Fourier conversion circuit 14.

The Fourier conversion circuit 14 performs Fourier conversion (FFT) to the received parallel data, thereby converting the time axis multicarrier data to frequency axis data, and outputs the converted frequency axis data to the tone selector 13 and the noise measurement device 9.

The tone selector 13 selects the tones #40, #60 and #80 which, were specified by the control circuit 10 and outputs them to the primary demodulator 12. Then, the primary demodulator 12 primary-demodulates the identical data on the three tones #40, #60 and #80 by using the primary modulation/demodulation system specified in the primary modulation/demodulation selection information.

Finally, the deframing circuit 11 reproduces the original transmitted data by deframing the demodulated data, and outputs the reproduced data to the device (not shown in the diagram) which the power line modem is mounted on. Here, deframing processing signifies the reverse processing to the framing processing of the framing circuit 1. For example, it signifies processing for removing the preamble and control code from the primary modulated frame and extracting only the data field, and reconstructing this to the format of the original transmitted data.

Subsequently, processing for replacing the primary modulation/demodulation system in the primary modulator 2 and the primary demodulator 12 will be explained. Firstly, the noise measurement device 9 measures the noise of the three tones output from the Fourier conversion circuit 14 while the power line modem is receiving the data, and outputs the result to the control circuit 10.

Here, the method by which the noise measurement device 9 measures the noise will be explained. To measure the noise, an expected value of the data which is presently being received is normally required, but here, the data contents in the data field are unclear. Accordingly, in the present embodiment, the noise of the tones is measured during reception by using the preamble and the synchronism code (see Fig. 2). For example, since the preamble carries preset data showing the start of the synchronism, it is possible to learn in advance which type of data is to be transmitted. Therefore, here, the preamble is used as an expected value for measuring the noise, and the noise of the received tones is measured in each frame transfer. The noise measuring method is not limited to this one, and for example may be measured by transferring frames for measuring noise at regular intervals.

After the noise of the receive tones has been measured by the method described above, the control circuit 10 determines whether a replacement is necessary for the primary modulation/demodulation system being used by the power line modem on the transmitting side which is the present communications partner based on the noise information (e.g. the S/N ratio) of the measured result. Then, when it is determined that a replacement is needed, transmission control code for primary modulation/demodulation system replacement request is notified to the framing circuit 1 of the power line modem (receiving side).

More specifically, the control circuit 10 has for example a conversion table (not shown in the diagram) of S/N ratios and communications qualities, and monitors the present communications quality based on the S/N ratio of the received signal which was measured by the noise measurement device 9 during communications. Then, in the case where the S/N ratio has deteriorated to a value which cannot maintain the stipulated desired communications quality, the control circuit 10 replaces the primary modulation/demodulation system in the order DQPSK DBPSK (DBPSK + time diversity) by means of control commands which will be explained later. In this way, the control circuit 10 improves the noise tolerance and maintains the desired communications quality with the existing S/N ratio.

Furthermore, when the control circuit 10 has determined that the S/N ratio has been improved based on the conversion table, it replaces the primary modulation/demodulation system in the order (reverse order) (DBPSK + time diversity) DBPSK DQPSK by means of control commands which will be explained later, thereby increasing the transmission speed. As described above, the POC is used for the replacement request/replacement specification command/replacement refusal command of the primary modulation/demodulation system.

Moreover, when the control circuit 10 has received a control code (received control code) sent from the power line modem on the transmitting side which is the communications partner from the deframing circuit 11 and has received a request to replace the primary modulation/demodulation system, it determines whether this is possible. Then, the control circuit 10 notifies the framing circuit 1 of the power line modem (receiving side) of the control code for replacement approval.

Finally, when it has been determined to replace the primary modulation/demodulation system, the control circuit 10 writes the primary modulation/demodulation system in the primary modulation/demodulation system replacement information, and notifies this information to the primary modulator 2 and the primary demodulator 12 of the power line modem.

Subsequently, a summary of the primary modulation/demodulation system replacement processing, that is, the exchange of control commands between power line modems, will be explained. In this embodiment, when replacing a primary modulation/demodulation system between existing power line modems which are connected on the same power line, the concept of a virtual master is used. More specifically, the power line modem from among the multiple power line modems connected on the power line 7 which has been determined to be "difficult to continue communications in the present primary modulation/demodulation system" based on the result of the noise measurement becomes a virtual master in the primary modulation/demodulation system replacement processing, and a series of processes termed "send replacement request and desired replacement destination/arbitration with other power line modems/specify replacement and replacement destination" is carried out.

That is, the virtual master uses the POC (see Fig. 2) to transmit the replacement request command (see Fig. 4) which specifies the next primary modulation/demodulation system to the other power line modem. Then, when there has been no response comprising a primary modulation/demodulation system replacement refusal command (see Fig. 4) from the other power line modem which received the replacement request command, the primary modulation/demodulation system which the power line modem is presently using is replaced with the next primary modulation/demodulation system. Moreover, the replacement specification command is transmitted to the other power line modem. Then, the other power line modem which has received the replacement specification command replaces the primary modulation/demodulation system it is using with the specified primary modulation/demodulation system.

Subsequently, the above-mentioned primary modulation/demodulation system replacement processing, that is, the exchange of control commands between the power line modems, will be explained in detail using the flowchart of Fig. 7. Fig. 7 is a flowchart showing the processing contents of a power line modem operating as a virtual master and a power line modem other than the virtual master according to this embodiment.

Firstly, as described above, the power line modem from among the multiple power line modems connected on the power line 7 which has been determined to be "difficult to continue communications in the present primary modulation/demodulation system" based on the result of the noise measurement becomes the virtual master in the primary modulation/demodulation system replacement processing, and the virtual master processing starts. The control circuit 10 of this virtual master selects the primary modulation/demodulation system which it desires to replace (step S1), and stores the primary modulation/demodulation system replacement request command "0000" (see Fig. 4) in which the selected primary modulation/demodulation system is written in the POC. Thereafter, the control circuit 10 transmits a transmission signal comprising the POC on the power line 7 (step S2).

All the power line modems other than the virtual master which have received the transmission signal transmitted on the power line 7 receive primary modulation/demodulation system replacement request commands (step S11), and determine whether it is possible to replace the primary modulation/demodulation system (step S12). The power line modems other than the virtual master carrier-sense and receive all the communications data flowing on the power line 7 at the physical layer level irrespective of whether the data transmitted on the power line 7 is addressed to them. For example, if the data is addressed to the power line modems themselves, the power line modems extract only the data field and notify the upper level of this. Therefore, all the power line modems receive and understand the contents of the control commands (see Fig. 2) sent on the power line 7, and response thereto when necessary.

Thereafter, when the power line modems other than the virtual master have determined to "refuse to replace the primary modulation/demodulation system" (step S13, No), they create a primary modulation/demodulation system replacement refusal command "0001" (see Fig. 4) and transmit it to the virtual master (step S14). When it has been determined "not to refuse to replace the primary modulation/demodulation system" (step S13, Yes), the processing shifts to step S15.

On the other hand, after the virtual master has transmitted the primary modulation/demodulation system replacement request command on the power line 7, it is determined whether at least one of the power line modems other than the virtual master has responded by sending a replacement refusal command within a predetermined period of time (step S3 and step S4).

For example, when at least one of the power line modems other than the virtual master has responded by sending a replacement refusal command within a predetermined period of time (step S3, No, step S4, Yes), the virtual master determines that "at least one of the power line modems other than the virtual master has refused to replace its primary modulation/demodulation system", and the primary modulation/demodulation system replacement processing and the virtual master processing end (step S5). Instead of ending the virtual master processing, it is possible to hereafter return to step S1 and select a primary modulation/demodulation system which is different to the previously selected one, and for example repeat this virtual master processing until the primary modulation/demodulation system can be replaced.

On the other hand, when no replacement refusal command has been received from the power line modems other than the virtual master within a predetermined period of time (step S4, No, step S3, Yes), the virtual master determines that "all the power line modems other than the virtual master have agreed to replace the primary modulation/demodulation system", creates the primary modulation/demodulation system replacement specification command "0010" specifying the replacement destination primary modulation/demodulation system, and transmits this to all the power line modems other than tile virtual master (step S6). Then, the primary modulation/demodulation system of the present power line modem is changed to the primary modulation/demodulation system selected in step S1 (step S7) and the virtual master processing ends when the replacement is completed.

Furthermore, when the power line modems other than the virtual master have determined "to refuse to replace the primary modulation/demodulation system" in the processing of step S13 (step S13, Yes), it is determined whether there is a power line modem other than the virtual master which has sent a replacement refusal command (step S15) and whether a replacement specification command has been received from the virtual master (step S16). Here, as described above, all the power line modems on the power line 7 perform carrier sensing and understand the contents.

For example, when a replacement specification command has not been received from the virtual master and a replacement refusal command has been received from a power line modem other than the virtual master (step S16, No, step S15, Yes), this power line modem determines that "at least one of the power line modems other than the virtual master is refusing to replace the primary modulation/demodulation systems", and ends the replacement processing.

On the other hand, when a replacement refusal command has not been received from a power line modem other than the virtual master and the replacement specification command "0010" has been received from the virtual master (step S15, No, step S16, Yes), this power line modem other than the virtual master determines that "all the power line modems other than the virtual master have agreed to replace the primary modulation/demodulation system", and replaces its system with the primary modulation/demodulation system written in the primary modulation/demodulation system replacement specification command from the virtual master (step S17). Now, the other power line modems other than the virtual master replace the primary modulation/demodulation system in the same way and the replacement processing ends. In replacing the primary modulation/demodulation system, replacement time information and replacement timing information and the like may be set in the replacement specification command so that the virtual master and all the power line modems other than the virtual master can replace the primary modulation/demodulation system simultaneously.

Subsequently, the replacement operation of a power line modem which has been newly connected to the power line 7 will be explained. For example, in order to learn which primary modulation/demodulation system is presently being used for communications, the newly connected power line modem stores the primary modulation/demodulation system verification inquiry "1100" (see Fig. 4) in a POC and transmits this to all the other existing power line modems by directly using the default primary modulation/demodulation system.

At this time, the power line modem which can respond most rapidly responds by transmitting the primary modulation/demodulation system which is presently being used by using the primary modulation/demodulation system verification response command "1101". On the other hand, the power line modems other than the power line modem which responded monitor the POC transmitted on the power line 7 and detect the primary modulation/demodulation system verification response command "1101" which was just responded to. Then, in this case, for example, when a power line modem was preparing to respond, it verifies that another power line modem has already responded and cancels the response it was preparing.

The newly connected power line modem receives the response and switches so that future transmitting and receiving can be carried out in the replacement destination primary modulation/demodulation system. This processing is performed not only by the newly connected power line modem, but also simultaneously by all the power line modems which have lost the primary modulation/demodulation system replacement specification command due to the effects of noise. That is, since this type of power line modem is set to a different primary modulation/demodulation system than the other power line modems, it must first cancel the setting of its primary modulation/demodulation system in order to carry out communications normally. As is the case when newly connected, the power line modem processes an inquiry about the primary modulation/demodulation system, and thereafter resets its primary modulation/demodulation system in compliance with the present primary modulation/demodulation system which it received in response. This process may be performed at regular intervals by all the existing power line modems.

In this way, in the present embodiment, one power line modem among the power line modems carrying out communications which are connected on the same power line 7 becomes the virtual master which requests to replace the primary modulation/demodulation system, and sends a request command to replace the present primary modulation/demodulation system to the power line modems other than the virtual master, the primary modulation/demodulation system being replaced when there is no replacement refusal command response from the power line modems other than the virtual master. Consequently, the primary modulation/demodulation system can be reliably replaced based on the opinions of all the power line modems.

Furthermore, in this embodiment, even in the case where the primary modulation/demodulation system has been replaced, the newly connected power line modem and the existing power line modems which have deviating primary modulation/demodulation systems inquire about the existing primary modulation/demodulation system by using the default primary modulation/demodulation system. As a consequence, the newly connected power line modem and a power line modem which has a deviated primary modulation/demodulation system and consequently cannot exchange communications normally using the present primary modulation/demodulation system can replace the present used primary modulation/demodulation system. Therefore, they can rapidly exchange normal communications between the other existing power line modems.

As shown in Fig, 3, the power line modems in the embodiment described above, identical input data is coded only at n set positions (m ≥ n ≥ a natural number of two or more) in a group of in tones (m ≥ a natural number of three or more) which are separated by predetermined frequency intervals, and the dispersed tones (multicarrier data) are transmitted. However, the invention is not limited to this. For example, irrespective of the tone intervals, it is acceptable to code differing input data to n continuous tones and transmit the dispersed tones or continuous tones. The same goes for the power line modem of the subsequent second embodiment.

Furthermore, in the power line modem in the embodiment described above, the tones are not replaced when there has been a replacement refusal command from at least one power line modem other than the virtual master. However, the invention is not limited to this. For example, the arrangement may be such that the tone is not replaced when there has been a replacement refusal command from two, three, ...or a number greater than a predetermined number of power line modems other than the virtual master. Furthermore, it is acceptable to use a replacement permission command and to determine whether to replace the primary modulation/demodulation system by comparing the number of replacement refusal commands with the number of replacement permission commands. The same goes for the power line modem of the subsequent second embodiment.

Next, a communications apparatus according to this invention, that is, the operation of a second embodiment of the power line modem will be explained. For example, in the first embodiment described above, the replacement request and replacement refusal commands for the primary modulation/demodulation system are carried out only once. However, in actual power line modems, the conditions requiring replacement of the primary modulation/demodulation system and tone shifts normally accompany a communications status which has deteriorated due to noise. Consequently, there is a high possibility that there will be a power line modem which cannot receive the command in a single transmission.

Accordingly, in the present embodiment, a case is envisaged where the commands to replace the primary modulation/demodulation system and refuse the replacement cannot be transmitted and received in a single transmission, and the commands to replace the primary modulation/demodulation system and refuse the replacement are transmitted multiple times, making the replacement processing more reliable. Since the hardware constitution in this embodiment is the same as that of the power line modem in the first embodiment described above (see Fig. 1), the same reference codes are used and further explanation is omitted.

Firstly, a summary of the primary modulation/demodulation system replacement operation in this embodiment will be explained simply. For example, the transmission of the primary modulation/demodulation system replacement request command by the virtual master is carried out a maximum number of N times over a period of time T. In the case where even one replacement refusal command has been received before reaching N times, the processing ends at that point and the processing of the virtual master simultaneously ends. On the other hand, in the case where no replacement refusal command has been received when N times is reached, this is regarded as allowing the primary modulation/demodulation system to be replaced and a replacement specification command is transmitted. At this time, when the replacement specification command is received, the method whereby all the power line modems which are presently connected replace their primary modulation/demodulation systems is the same as in the first embodiment described above.

On the other hand, when a power line modem other than the virtual master has received the replacement request command but refuses the replacement, it transmits a replacement refusal command. However, when a replacement refusal command has been received from another power line modem other than the virtual master, it cancels the transmission of its own refusal command. Furthermore, when a replacement refusal command has been received a second time during the fixed time period irrespective of the fact that a replacement refusal command has been transmitted and irrespective of the fact that a replacement refusal command has been received from another power line modem, the power line modem determines that "the virtual master did not receive the previous refusal command" and transmits the refusal command a second time.

Furthermore, even when a power line modem other than the virtual master has transmitted a replacement refusal command in spite of being able to accept the replacement requested by the replacement request command, it waits for a replacement specification command during a fixed period of time $T = t \times N$ from the reception of the first replacement refusal command. When the fixed period of time elapses without the replacement specification command being received, the power line modem determines that "the primary modulation/demodulation system replacement request command has been cancelled" and ends the replacement processing without replacing the primary modulation/demodulation system.

Subsequently, the primary modulation/demodulation system replacement operation in the existing power line modems will be explained in detail. Fig. 8 is a flowchart showing processing contents of the virtual master in the second embodiment. The processing steps which are identical to those in Fig. 7 are represented by identical reference codes and further explanation thereof is omitted.

Firstly, after the virtual master processing has started, the virtual master selects the next primary modulation/demodulation system (step S1, step S2). For example, the virtual master resets a counter which can count to N and a timer which can measure to t (step S21) and performs transmission processing of the primary modulation/demodulation system replacement request command.

Following the transmission processing of the primary modulation/demodulation system replacement request command, the virtual master starts the timer and determines whether a replacement refusal command has been received from at least one power line modem other than the virtual master before a predetermined period of time t has elapsed (step S3, step S4). Then, when a replacement refusal command has been received from at least one power line modem other than the virtual master before the predetermined period of time t elapses (step S3, No, step S4, Yes), the virtual master ends the replacement of the primary modulation/demodulation system and simultaneously the virtual master processing ends.

On the other hand, when no replacement refusal command is received from at least one power line modem other than the virtual master before the predetermined period of time t has elapsed (step S4, No, step S3, Yes), without shifting to transmission processing of the primary modulation/demodulation system replacement specification command the virtual master increments the counter value n by "1" and resets the timer value (step S22). Thereafter, the virtual master determines whether the counter value n has exceeded the maximum value N (step S23).

For example, when the counter value n is less than the maximum value N (step S23, No), the virtual master determines that "a replacement request command has not been transmitted over N repeated transmissions during the fixed period of time T ($t \times N$)", and carries out retransmission processing of the replacement request command which the primary modulation/demodulation system is written in (step S24). Thereafter, the virtual master returns once again to the processing of step S3 and repeats the same processing.

On the other hand, when the counter value n has become greater than the predetermined maximum value N (step S23, Yes), the virtual master determines that "even after carrying out N transmissions in the fixed period of time T, a replacement refusal command was not received from any of the power line modems other than the virtual master during the time $t \times N$" and transmits the primary modulation/demodulation system replacement specification command which the next primary modulation/demodulation system is written in (step S26). Simultaneously, the virtual master replaces the primary modulation/demodulation system set in the power line modem (step S7).

Next, the processing of the power line modems other than the virtual master will be explained. Fig. 9 is a flowchart showing the processing contents of the second embodiment in a power line modem other than the virtual master. The processing steps which are the same as those of the flowchart shown in Fig. 7 are represented by the same reference codes and further explanation thereof is omitted.

Firstly, after the power line modem other than the virtual master has received the primary modulation/demodulation system replacement request command (step S11), it resets the timer (step S31), and carries out a primary modulation/demodulation system replacement possibility determination process (step S12, step S13). For example, when it has determined to replace the primary modulation/demodulation system (step S13, Yes), the power line modem other than the virtual master determines whether a replacement specification command is received from the virtual master before the fixed period of time T (= t × N) elapses (step S32, step S33).

Here, when a replacement specification command is received from the virtual master before the fixed period of time T has elapsed (step S32, No, step S33, Yes), the power line modem other than the virtual master determines that "all the power line modems other than the virtual master have agreed to replace the primary modulation/demodulation system" and changes to the primary modulation/demodulation system which is set in the replacement specification command from the virtual master, whereby the replacement processing ends.

On the other hand, when no replacement specification command is received from the virtual master before the fixed period of time T (= t × N) has elapsed (step S33, No, step S32, Yes), the power line modem other than the virtual master determines that "at least one of the power line modems other than the virtual master has refused to replace the primary modulation/demodulation system" and ends the replacement processing.

Furthermore, in the replacement possibility determination processing of step S13, when it has been determined not to replace (step S13, No), the power line modem other than the virtual master determines whether a primary modulation/demodulation system replacement refusal command has been received from another power line modem other than the virtual master (S15). Then, the power line modem other than the virtual master transmits a primary modulation/demodulation system replacement refusal command (step S14) only when a replacement refusal command has not been received (step S15, No). Moreover, as when the replacement was determined to be OK in step S13, it is determined whether a primary modulation/demodulation system replacement specification command has been received from the virtual master before the fixed period of time T (= t × N) has elapsed (step S34, step S16). In the determination of step S15, when a replacement refusal command has been received from another power line modem other than the virtual master (step S15, Yes), the processing may be ended without shifting to the determination processing of step S34.

Furthermore, in the case where no replacement specification command is received from the virtual master even though the fixed period of time T (= t × N) has elapsed (step S34, Yes), the power line modem other than the virtual master determines that "at least one of the power line modems other than the virtual master is refusing to replace the primary modulation/demodulation system" and ends the replacement processing. On the other hand, when a replacement specification command is received from the virtual master before the fixed period of time T has elapsed (step S34, No, step S16, Yes), the power line modem other than the virtual master determines that "all the power line modems other than the virtual master have agreed to replace the primary modulation/demodulation system" and changes to the primary modulation/demodulation system which is set in the replacement specification command from the virtual master, whereby the replacement processing ends.

Furthermore, when a replacement specification command is not received from the virtual master during the fixed period of time T (= t × N) (step S34, No, step S16, No), the power line modem other than the virtual master determines whether a replacement request command is received a second time from the virtual master during before the fixed period of time T (= t × N) elapses, and whether a primary modulation/demodulation system replacement refusal command is received from the other power line modems other than the virtual master (step S35, step S36).

Here, when a replacement request command is not received from the virtual master (step S35, No), and when a replacement request command has been received a second time from the virtual master but a primary modulation/demodulation system replacement refusal command has been received from another power line modem other than the virtual master (step S35, Yes, step S36, Yes), the power line modem other than the virtual master returns to step S34 and repeats the above processing.

On the other hand, when a replacement request command is received a second time from the virtual master and a primary modulation/demodulation system replacement refusal command has not been received from another power line modem other than the virtual master (step S35, Yes, step S36, No), the power line modem other than the virtual master retransmits a replacement refusal command, returns to step S34 and repeats the above processing. In the case where the replacement request command from the virtual master has been received a second time and a primary modulation/demodulation system replacement refusal command has been received from another power line modem other than the virtual master (step S35, Yes, step S36, Yes), the replacement processing may end here without shifting to the determination processing of step S34.

Subsequently, a replacement operation of a power line modem which is newly connected to the power line 7 will be explained. Firstly, as in the first embodiment, in order to learn which primary modulation/demodulation system is presently being used for communications, the newly connected power line modem transmits the primary modulation/demodulation system verification inquiry "1100" (see Fig. 4) to all the other existing power line modems by directly using the default primary modulation/demodulation system.

Then, the power line modem transmits a primary modulation/demodulation system verification inquiry command a multiple number of times in the same operation as the above-described primary modulation/demodulation system replacement operation between the existing power line modems, enabling the primary modulation/demodulation system to be learned more reliably. That is, in the present embodiment, the newly connected power line modem carries out an inquiry about the primary modulation/demodulation system which is presently being used, and when no response is received within a fixed period of time, it repeats the inquiry in each fixed period of time until a response is received.

As in the first embodiment, the power line modem which can respond most rapidly responds by transmitting the primary modulation/demodulation system which is presently being used by using the primary modulation/demodulation system verification response command "1101". At this time, when another other power line modem was preparing to respond, it verifies that another someone has already responded and cancels the response it was preparing.

The newly connected power line modem receives the response and switches so that future transmitting and receiving is carried out in the primary modulation/demodulation system which is the replacement destination. For example, when there is no response from another power line modem even when repeated M times, it is determined that there are no existing power line modems and subsequent communications are performed by using the default DQPSK primary modulation/demodulation system.

In this way, in the present embodiment, one of the power line modems which are connected on the power line 7 and perform communications becomes a virtual master for requesting a replacement of the primary modulation/demodulation system, whereby the replacement processing of the primary modulation/demodulation system is carried out. Then, newly connected power line modems and power line modems which cannot perform communications in the present primary modulation/demodulation system use the default primary modulation/demodulation system for communications. As a consequence, primary modulation/demodulation system can be reliably replaced based on the opinions of all the power line modems. In addition, the newly connected power line modems and power line modems which cannot perform communications in the present primary modulation/demodulation system are able to replace to the correct primary modulation/demodulation system and carry out communications speedily with the existing power line modems.

In this embodiment, a case is envisaged wherein the replacement request command and the replacement refusal command cannot be transmitted and received in one transmission, and are transmitted a multiple number of times to increase the reliability of the replacement processing. Consequently, a power communications system can be provided which is robust even in a communications environment which is especially vulnerable to the effects of noise from a factory or a power source.

In the first and second embodiments, the primary modulator 2 and the primary demodulator 12 provide three primary modulation/demodulation systems DQPSK, DBPSK and (DBPSK + time diversity), these primary modulation/demodulation systems being replaced in three stages based on primary modulation/demodulation selection information from the control circuit 10. However, there is not restriction on this, and primary modulation/demodulation systems other than these primary modulation/demodulation systems may be used.

Furthermore, in the case where the S/N ratio has deteriorated and a fixed level of communications quality cannot be maintained, the DBPSK primary modulation/demodulation system may be skipped so that the primary modulation/demodulation system is replaced in the two stages of DBPSK→ (DBPSK( + time diversity). Furthermore, when the S/N ratio has improved, the primary modulation/demodulation system may be replaced immediately by a desired primary modulation/demodulation system, irrespective of the type of the present primary modulation/demodulation system.

That is, in the present embodiment, in the case where the S/N ratio has deteriorated and a fixed level of communications quality cannot be maintained, the noise tolerance is increased by replacing the primary modulation/demodulation system, enabling a predetermined level of communications quality to be maintained with the present S/N ratio. Then, when the S/N ratio has improved, the transmission speed is increased as a result of the primary modulation/demodulation system replacement. The primary modulation/demodulation system need not be replaced when the S/N ratio has improved. The same goes for the following embodiments.

Next, a communications apparatus according to this invention, that is, the operation of a third embodiment of the power line modem will be explained. For example, in the first and second embodiments described above, the replacement processing of the primary modulation/demodulation system in the primary modulator 2 and the primary demodulator 12 was explained. In the present embodiment, when it has become difficult to maintain the desired communications quality, the replacement processing of the primary modulation/demodulation system according to the first and second embodiments is carried out despite the replacement of the tone group and the set position.

Fig. 10 is a diagram that shows one example of a tone group used in the power line modem of the present embodiment. As shown in Fig. 10, this embodiment envisages 101 tones (tone #0 to tone #100) at intervals of 4.3125 kHz. For example, in order to maintain compatibility between multicarrier modulation/demodulation system communications using these tones and the frequency, five tone groups are provided at sixteen intervals, and sixteen tone groups are defined by using the tones #17 to #96. As shown in Fig. 10, the default tone group is the tone group 0 which comprises the tone groups of tones #32, #48, #64, #80 and #96.

Fig. 11 is a diagram that shows combinations of set positions which are prepared in advance by the control circuit 10. As shown in Fig. 11, in this embodiment, in each tone group three low-frequency side groups define the low position, three middle groups define the middle position, and three high-frequency side groups define the high position. In all the groups, the Middle position is the default set position. Furthermore, data is transferred by selecting a specific set position and using those three tones. Fig. 11 shows the set positions of the default tone group 0. In this case, the default set position Middle comprises the middle tones #48, #64 and #80.

Fig. 12 is a diagram showing the constitution of the communications apparatus according to this invention, that is, the power line modem according to the third embodiment. Since the hardware constitution in this embodiment is the same as that of the power line modem in the first and second embodiments described above, the same reference codes are used and further explanation is omitted. In Fig. 12, 17 represents a carrier detecting device, and 18 represents a dummy carrier creating device. That is, in the present embodiment, the carrier detecting device 17 and the dummy carrier creating device 18 are the newly added points of difference. Moreover, a new function of controlling the tone groups and the set positions is added to the control circuit 10 and is explained later.

In the power line modem of the above constitution, the carrier detecting device 17 has a function for detecting whether some sort of data is being transmitted in the frequency band of the tone groups and set positions which are presently being used, and in the frequency band of the default tone groups and set positions. Of these, the carrier detection of the default tone groups and set positions is carried out as normal. Furthermore, when the tone groups and set positions are being replaced, carrier detection of the tone frequency which is presently being used is carried out based on tone selection information from the control circuit 10, and is sent as carrier detection information to the control circuit 10.

The dummy carrier creating device 18 has a function for creating dummy carriers to be output to the tones of the tone groups and set positions when the tone group/set position are shifted. Here, based on the tone selection information from the control circuit 10, it is determined whether the tone groups and set positions are shifting. When they are shifting, dummy carriers are created for the tones which are presently not being used in communications among the tones which form the default tone groups and set positions. A sine wave and the like having the same frequency as the frequency of the tones which form the default tone groups and set positions may be considered as an example of a dummy carrier.

The control circuit 10 has the function described in the first and second embodiments, that is, a function for replacing the primary modulation/demodulation system. Moreover, when carriers at a shift destination tone and a default tone have been detected simultaneously based on the contents of the carrier detection information from the carrier detecting device 17, it is determined that a dummy carrier is being transmitted at the default tone, and the tone selectors 3 and 13 are notified of the tone selection information so as to receive the shift destination tone. Furthermore, when a carrier is not detected at the shift destination tone but a carrier is detected at the default tone, the tone selectors 3 and 13 are notified of the tone selection information so as to receive the data of the default tone.

When shifting the tones, the control circuit 10 firstly outputs tone selection information so as to change the set position in the default tone group 0 from the middle position to the low position or the high position. Then, when the S/N ratio is still too low, making it difficult to maintain communications quality above a fixed level, the control circuit 10 outputs tone selection information so as to replace the set positions in the default tone group 0 with the other tone groups 1, or the tone groups 5, 10, 15 and the like which have slightly more widely spaced tones. Thereafter, the set positions are replaced in the manner described above.

Furthermore, when the S/N ratio is still too low, making it difficult to maintain the communications quality above a fixed level, the control circuit 10 outputs primary modulation/demodulation selection information so as to replace the primary modulation/demodulation system by the methods described above in the first and second embodiments. The replacement processing of the tone groups/set positions is achieved by using a POC to exchange control commands for tone verification "10" and tone replacement "10" shown above in Fig. 4. Furthermore, the control commands are added with data and the like to the transmission frames by the framing processing of Fig. 2, and are later separated from the transmission frames by the deframing processing, and extracted.

Subsequently, the operation of replacing tones in this embodiment will be explained. As already explained in connection to Fig. 10 and Fig. 11, the combinations of the tone groups and set positions are determined in advance, and the power line modems on the transmitting side and the power line modems on the receiving side use these combinations in common. Furthermore, the set position of a tone which is assumed will usually have little extremely powerful noise on the power line 7 being used is determined as the default tone group and set position. When communications start, communications are always carried out at the default tone group and set position.

Here, the carrier sensing method of the power line modems will be explained. Carrier sensing is a term which signifies checking whether other power line modems are sending some kind of transmissions on the power line 7. All the power line modems perform carrier sensing at all times when they are not transmitting and receiving by means of the carrier detecting device 17 (see Fig. 12). When a carrier is detected, the power line modems transmit carrier detection information to the control circuit 10 and directly shift to receive status. For example, when sending a transmission, the power line modem shifts to transmission status after verifying that there is no carrier on the power line 7.

No special processing is needed to perform communications at the default tone groups and set positions without replacing the tone groups and set positions. However, when a tone has been replaced, a transmitting power line modem transmits data by using the tone group and set position at the replacement destination in compliance with the control circuit 10. In addition, the power line modem transmits set position selection information, a control signal and the like to the dummy carrier creating device 18 which creates a dummy carrier, and the dummy carrier is output to the tones in the default tone group and set position. This is necessary after replacing the tone group/set position, when the newly participating power line modem makes an inquiry about the present tone group and set position.

Carrier sensing is carried out by measuring the signal power of the target tones. The targets of the carrier sensing are the three tones of the default tone group and set position. When a tone is being replaced, the tone of the replacement destination is added, resulting in multiple target tones. The tone to be the target of carrier sensing is determined in the following ways depending on the replacement status of the tone.

(1) When the set position and tone group have not been replaced:

In this case, carrier sensing is carried out to the three tones at the set position (tones #48, #64 and #80) and the default tone group.

(2) When only the set position has been replaced:

In this case, in addition to the tones of the set position and the tone group, a further tone (tone #32 or tone #96) which is being used at the set position of the replacement destination is added, and carrier sensing is carried out for a total of four tones.

(3) When the tone group has been replaced:

In this case, since the set position is also replaced, carrier sensing is carried out for the three tones of the default tone group and the set position in addition to the three tones at the replacement destination and set position, a total of six tones.

In the cases of (2) and (3) where the tone group and set position are replaced, when a carrier is detected at any one of the tones, receive processing starts. Now, the tone group/set position to be received is determined in the following ways depending on the position of the detected carrier.

(a) When carriers have been detected at the default tone group and set position and at the replacement destination tone group and set position:

In this case, receiving is carried out at the replacement destination tone group and set position. This is because transmitting and receiving is being carried out at the replacement destination tone group and set position, and the above-mentioned dummy carrier is being output at the default tone group and set position.

(b) When a carrier is detected only at the tone group and set position:

In this case, receiving is carried out at the default tone group and set position. Communications at the tone group and set position has started after the replacement of the tone group and set position, and firstly, after the replacement of the tone group/set position, the newly participating power line modem uses the default tone group and set position to inquire about the present tone group and set position. Furthermore, secondly, in a case when the received data is a dummy character although a carrier has been detected only at the default tone group and set position, the power line modem has lost the tone replacement specification command as a result of noise and the like, and there is an error in the tone position information which is set in this modem. In this case, the power line modem cancels its tone position setting and processes an inquiry about the tone position simultaneous to newly connecting. In compliance with the present tone position information sent in response, the power line modem resets the tone position setting. This is because there is a possibility that the tone groups and set positions of other power line modems may have been replaced.

Subsequently, a summary of the operation of replacing the tone groups and set positions will be explained simply. The detailed exchanges of control commands during the operation of replacing the tone groups and set positions is the same as the exchange of control commands in the case where the primary modulation/demodulation system is replaced in the first and second embodiments. For example, this can be explained by substituting "primary modulation/demodulation system" in Figs. 7 to 9 with "tone groups and set positions".

Firstly, in the present embodiment, the power line modem from among the multiple power line modems connected on the power line 7 which has been determined to be "difficult to continue communications in the present primary modulation/demodulation system" based on the result of the noise measurement becomes the virtual master in the tone replacement processing, and a series of processes termed "send replacement request and desired replacement destination/arbitration with other power line modems/specify replacement and replacement destination" is carried out.

Then, the virtual master transmits the tone replacement request command (see Fig. 4) to the other power line modems, and waits for a fixed period of time for a response from the other power line modems. When even just one replacement refusal command (see Fig. 4) is received during this period, the virtual master ends the replacement processing at that point, and simultaneously ends the virtual master processing. Therefore, the virtual master only carries out the replacement processing and transmits a replacement specification command (see Fig. 4) in the case where no replacement refusal command has been received even though the fixed period of time has elapsed.

On the other hand, when the power line modems other than the virtual master have received the above replacement request command and have refused the replacement, they transmit a replacement refusal command. Then, when a command from a power line modem other than the virtual master the virtual master has not been received, the virtual master transmits a replacement specification command to the power line modems other than the virtual master. Finally, the power line modems other than the virtual master replace the tone groups and set positions immediately upon receiving the replacement specification command.

In this way, in the present embodiment, the primary modulation/demodulation system is replaced by using the same method as in the first and second embodiments only in the case where, after an increase in noise, the tone groups and set positions have been replaced and multicarrier communications have been carried out at the replacement tones, but in spite of this a fixed level of communications quality cannot be maintained due to the effects of noise. As a consequence, in the present embodiment, when the communications quality can be maintained above a fixed level merely by replacing the tone groups and set positions, there is no need to replace the primary modulation/demodulation system which requires laborious processing.

In the present embodiment, the primary modulation/demodulation system is replaced when it is difficult to maintain the communications quality above a fixed level even though the tone groups and set positions have been replaced. However, the embodiment is not limited to this, and the tone groups and set positions may be replaced in the case when it is difficult to maintain the communications quality above a fixed level even though the primary modulation/demodulation system has been replaced.

Next, the characteristics of a fourth embodiment of the power line modem according to this invention will be explained. In the following embodiments, a new frame format and command are proposed to the first to third embodiments described above. Since the hardware constitution in this embodiment is the same as that of the power line modems in the first to third embodiments described above (see Fig. 11 and Fig. 12), the same reference codes are used and further explanation is omitted.

Fig. 13 is a diagram showing the constitution of a frame in the fourth embodiment. In comparison with the frame constitution of the first embodiment shown in Fig. 1, in Fig. 13, frame information which represents the frame length, a house code comprising a code for house identification in order to identify the power line communications between houses, and an R-S code for correcting header errors of the preamble, the synchronism code, the frame length and the like, are newly added. The constitution of the POC is the same as that of the POC in the first embodiment shown in Fig. 3. Furthermore, the contents of the control commands and the like of the POC are the same as the contents of the first embodiment shown in Fig. 4.

In this way, in the present embodiment, the addition of a frame length to the transmitted frame makes it possible to easily identify the frame correctly. Moreover, the addition of the R-S code makes it possible to correct errors. As a consequence, power line communications can be made more reliable. Furthermore, the addition of a house code makes it possible to identify power line communications of each house, enabling privacy to be protected.

Next, the characteristics of a fifth embodiment of the power line modem according to this invention will be explained. The frame constitution in this embodiment is the same as the frame constitution of the above-described fourth embodiment shown in Fig. 13, and comprises frame length information, a house code and an R-S code added to the frame constitution of the first embodiment shown in Fig. 2.

Fig. 14 is a diagram showing the constitution of a POC of this embodiment. In this embodiment, the communications code is provided at the head. Moreover, the command comprises four bits with no discrimination between the command and subcommand, and furthermore, the above-mentioned tone position/modulation system information is the extension number for the command.

Fig. 15 is a diagram showing a list of the contents of the control command in the above POC. The control command shown in Fig. 15 comprises a four-bit control command and a six-bit command extension number in correspondence with the constitution of the POC shown in Fig. 14. The reason for the command extension number is that the number of commands is different in each of the communications modes 1 to 3. Moreover, a different command is used in each communications mode. Fig. 15 for example shows the command of communications mode 1 and the command extension number.

In this way, the present embodiment obtains the same effects as the fourth embodiment described above. In addition, since the communications mode is stored at the head of the POC, the communications mode can be checked before the control command, making it easier to select the frame based on the communications mode. Therefore, reading processing of excess commands can be reduced. Moreover, in the present embodiment, since there is no discrimination between the command and the subcommand, it is not necessary to provide excess undefined commands such as "Reserved" and the like, whereby the load of command processing is made lighter.

Next, the characteristics of a sixth embodiment of the power line modem according to this invention will be explained. The frame constitution in this embodiment is the same as the frame constitution of the above-described fourth embodiment shown in Fig. 13, comprising frame length information, a house code and an R-S complex code added to the frame constitution of the first embodiment shown in Fig. 2.

Fig. 16 is a diagram showing the constitution of a POC in the fifth embodiment. In this embodiment, the communications code is provided at the head. Moreover, the above-mentioned tone position/modulation system information is the extension number for the command. Furthermore, unlike the fifth embodiment, without joining the command and subcommand, the command is further increased from two bits to three bits and the preparatory bits are reduced from four bits to three bits.

Fig. 17 is a diagram showing a list of the contents of the control command in the above POC. In correspondence with the constitution of the POC shown in Fig. 16, the control command shown in Fig. 17 is increased to three bits and combined with a two-bit subcommand to express various control commands. Then, an NOP and dummy command are expressed as an artificial command. Fig. 17 for example shows the commands of communications mode 1 and the command extension numbers.

In this way, the present embodiment obtains the same effects as the fourth and fifth embodiments described above. In addition, the number of bits in the command is increased, the variety of various commands can be increased.

Next, the characteristics of a seventh embodiment of the power line modem according to this invention will be explained. The frame constitution in this embodiment is the same as the frame constitution of the above-described fourth embodiment shown in Fig. 13, comprising frame length information, a house code and an R-S complex code added to the frame constitution of the first embodiment shown in Fig. 2. Furthermore, the constitution of the POC is the same as the POC in the sixth embodiment shown in Fig. 16.

Fig. 18 is a diagram showing a list of the contents of the control commands in the POC in the seventh embodiment. In correspondence with the POC constitution shown in Fig. 16, in the control command of Fig. 18, the command and subcommand are each increased to three bits, whereby a variety of control commands are expressed by a total of six bits. Then, an NOP and dummy command are expressed as an artificial command. Fig. 18 for example shows the command of communications mode 1 and the command extension number.

In this way, the present embodiment obtains the same effects as the fourth to sixth embodiments described above. In addition, since the bit numbers of the command and subcommand are each increased, the variety of various commands can be further increased.

INDUSTRIAL APPLICABILITY

As described above, the communications apparatus according to this invention utilizes a digital communications system such as a DMT (Discrete Multi Tone) modulation/demodulation system, an OFDM (Orthogonal Frequency Division Multiplex) modulation/demodulation system, a CAP (Carrier-less Amplitude Phase) modulation/demodulation system, or a PAM (Pulse Amplitude Modulation) modulation/demodulation system. In addition, the communications apparatus of this invention is effective in communications using a transmission path which is liable to be affected by noise, and is particularly suitable for communications (data, audio, visual, etc.) using existing power lines.

**Claims**

1.    A communications apparatus capable of carrying out data communications with other communications apparatuses connected on the same transmission path using a multicarrier modulation/demodulation system, said communications apparatus comprising:

    a constitution which can perform modulation/demodulation based on to a plurality of primary modulation/demodulation systems, wherein when requesting a replacement of a primary modulation/demodulation system which is presently being used, a replacement request command specifying an another primary modulation/demodulation system which is different from the current one is transmitted to all said communications apparatuses connected on the same transmission path;

and thereafter, when no replacement refusal command is received from any of said communications apparatuses within a predetermined period of time, replaces the primary modulation/demodulation system with the another primary modulation/demodulation system, and moreover, transmits a replacement specification command to all said communications apparatuses, whereby the primary modulation/demodulation systems set in all said communications apparatuses is changed to the another primary modulation/demodulation system.

2. A communications apparatus capable of carrying out data communications with other communications apparatuses connected on the same transmission path using a multicarrier modulation/demodulation system, said communications apparatus comprising:

a constitution which can perform modulation/demodulation based on to a plurality of primary modulation/demodulation systems, wherein when a replacement specification command specifying an another primary modulation/demodulation system which is different from the current one is received from any of said communications apparatuses within a predetermined period of time, replaces its primary modulation/demodulation system with the another primary modulation/demodulation system.

3. A communications method characterized in that a communications apparatus on the transmitting side primary modulates input data, creates a multicarrier by sequentially executing multicarrier modulation, and thereafter transmits said multicarrier data on a transmission path, and on the other hand, a communications apparatus on the receiving side sequentially executes multicarrier demodulation and primary demodulation of the received multicarrier data, thereby demodulating said original input data;

a communications apparatus which wishes to replace its primary modulation/demodulation system replaces the primary modulation/demodulation system which is presently being used with another primary modulation/demodulation system in linkage with other communications apparatuses which are connected on the same transmission path, and thereafter carries out primary modulation/demodulation by using the new primary modulation/demodulation system.

4. The communications method according to claim 3, characterized in that a communications apparatus which wishes to replace the primary modulation/demodulation system transmits a replacement request command specifying the another primary modulation/demodulation system which is different from the current one to all communications apparatuses which are connected on the same transmission path; and thereafter, when no replacement refusal command is received from any of said communications apparatuses within a predetermined period of time, the communications apparatus replaces its primary modulation/demodulation system with the another primary modulation/demodulation system, and moreover, transmits a replacement specification command to all said communications apparatuses, whereby the primary modulation/demodulation systems set in all said communications apparatuses changed to the another primary modulation/demodulation system.

5. The communications method according to claim 4, characterized in that the variety of commands are stored in a field in a transmitted frame which is checked by all said communications apparatuses.

6. The communications method according to claim 3, characterized in that a communications apparatus which wishes to replace the primary modulation/demodulation system transmits a replacement request command specifying an another primary modulation/demodulation system which is different from the current one to all said communications apparatuses which are connected on the same transmission path; determines whether there is a response from other communications apparatuses, and where no replacement refusal command is received from any of said communications apparatuses within the predetermined period of time, resets said timer and thereafter repeatedly executes said determination processing and timer reset processing a predetermined number of times;

when no replacement refusal command is received from any of said communications apparatuses in this state, replaces its primary modulation/demodulation system with the another primary modulation /demodulation system; and moreover, transmits a replacement specification command to all said communications apparatuses, whereby the primary modulation/demodulation systems set in all said communications apparatuses is changed to the other primary modulation/demodulation system.

7. The communications method according to claim 6, characterized in that the variety of commands are stored in a field in a transmitted frame which is checked by all said communications apparatuses.

8. The communications method according to claim 3, characterized in that a case when said communications apparatus wishes to replace its primary modulation/demodulation system is a case when the S/N ratio of said multicarrier data has deteriorated such that a fixed level of communications quality cannot be maintained without difficulty.

9. The communications method according to claim 8, characterized in that when the S/N ratio of said multicarrier data has improved, enabling the fixed level of communications quality to be maintained, the communications apparatus links with the other communications apparatuses connected on the same transmission path and returns the primary modulation/demodulation system presently being used sequentially to the original primary modulation/demodulation system.

10. The communications method according to claim 3, characterized in that a case when said communications apparatus wishes to replace its primary modulation/demodulation system is a case when, in spite of the fact that the carrier used to transmit and receive said multicarrier data has been shifted to the optimum frequency band, the S/N ratio of said multicarrier data has deteriorated such that a fixed level of communications quality cannot be maintained without difficulty.

11. The communications method according to claim 10, characterized in that when the S/N ratio of said multicarrier data has improved, enabling the fixed level of communications quality to be maintained, the communications apparatus links with the other communications apparatuses connected on the same transmission path and returns the primary modulation/demodulation system presently being used sequentially to the original primary modulation/demodulation system.

12. The communications method according to claim 3, characterized in that a case where there is a wish to replace said primary modulation/demodulation system is a case when existing communications apparatuses and a communications apparatus which has been newly connected on the same transmission path as said communications apparatuses starts multicarrier communications.

13. The communications method according to claim 3, characterized in that all said communications apparatuses use time diversity for temporally repeatedly modulating identical multicarrier data as the pri-

mary modulation/demodulation system.

# FIG.1

TRANSMISSION PATH 7

TRANSMITTED DATA → FRAMING CIRCUIT (1) → PRIMARY MODULATOR (2) → TONE SELECTOR (3) → IFFT (4) → P/S (5) → D/A (6)

TRANSMISSION CONTROL CODE

PRIMARY MODULATION SYSTEM SELECTION INFORMATION

TONE SELECTION INFORMATION

CONTROL CIRCUIT (10)

NOISE MEASURING DEVICE (9)

COUPLING CIRCUIT (8)

NOISE INFORMATION

RECEIVE CONTROL CODE

PRIMARY DEMODULATION SYSTEM SELECTION INFORMATION

RECEIVED DATA ← DEFRAMING CIRCUIT (11) ← PRIMARY DEMODULATOR (12) ← TONE SELECTOR (13) ← FFT (14) ← S/P (15) ← A/D (16)

EP 1 075 103 A1

# FIG.2

TRANSMITTED DATA

⬇ DATA DIVISION

TRANSMITTED DATA

⬇ FRAME CREATION

| FRAME 1 | FRAME 2 | FRAME 3 | FRAME 4 | · · · · · · · · · · · · | FRAME N |

| PREAMBLE | SYNCHRONISM CODE | PCC | DATA FIELD |

| PREAMBLE: TRANSMIT FIXED DATA FOR SYMBOL SYNCHRONISM, TRANSMIT DATA "2" TO ALL TONES | SYNCHRONISM CODE: TRANSMIT PRESET EXISTING DATA | POC: TRANSMIT CONTROL COMMANDS TO BE USED AT PHYSICAL LAYER |

| 16 SYMBOL | 16 BIT | 16 BIT |

EP 1 075 103 A1

# FIG.3

| COMMAND 2 BIT | SUBCOMMAND 2 BIT | TONE POSITION / MODULATION SYSTEM INFORMATION 6 BIT | COMMUNICATIONS MODE 2 BIT | PREPARATORY 4 BIT |
|---|---|---|---|---|

POC CONSTITUTION

# FIG.4

| COMMAND (2 BIT) | SUBCOMMAND (2 BIT) | TONE POSITION INFORMATION (TONE GROUP:4 BIT, SET POSITION:2 BIT) | |
|---|---|---|---|
| TONE VERIFICATION [01] | INQUIRY [00] | NONE | |
| | RESPONSE [01] | PRESENT TONE | [sssspp] |
| | RESERVED [10] | NONE | |
| | RESERVED [11] | NONE | |
| TONE REPLACEMENT [10] | REQUEST [00] | DESIRED TONE | [sssspp] |
| | REFUSAL [01] | NONE | |
| | SPECIFICATION [10] | REPLACEMENT TONE | [sssspp] |
| | RESERVED [11] | NONE | |
| COMMAND (2 BIT) | SUBCOMMAND(2 BIT) | PRIMARY MODULATION SYSTEM INFORMATION (6 BIT) | |
| PRIMARY MODULATION SYSTEM [00] | REQUEST [00] | DESIRED PRIMARY MODULATION SYSTEM | [xxxxxx] |
| | REFUSAL [01] | NONE | |
| | SPECIFICATION [10] | REPLACEMENT PRIMARY MODULATION SYSTEM | [xxxxxx] |
| | RESERVED [11] | NONE | |
| PRIMARY MODULATION SYSTEM VERIFICATION [11] | INQUIRY [00] | NONE | |
| | RESPONSE [01] | PRESENT TONE | [xxxxxx] |
| | RESERVED [10] | NONE | |
| | NOP [11] | NONE | |

| COMMUNICATIONS MODES (2 BIT) | MODE 1 [00] |
|---|---|
| | MODE 2 [01] |
| | MODE 3 [10] |
| | RESERVED [11] |

SHOWS TONE GROUP NUMBERS NO. 0 TO NO. 15 AT 4 BIT TONE GROUP POSITION OF TONE POSITION INFORMATION.
SET POSITION 2 BIT OF TONE POSITION INFORMATION IS "00" = MIDDLE , "01"=LOW, "10"=HIGH, "11"=RESERVED.
PRIMARY MODULATION SYSTEM:
"000000"=DQPSK, "000001"=DBPSK, "000002"=DBPSK+TIME DIVERSITYS

# FIG.5

DETERMINE ROTATION ANGLE
FROM COMMUNICATIONS DATA

| DATA | ROTATION ANGLE |
|------|----------------|
| 00 | 0 |
| 01 | $\pi/2$ |
| 11 | $\pi$ |
| 10 | $3\pi/2$ |

(1 SYMBOL=2 BIT)

(a) DQPSK

DETERMINE ROTATION ANGLE
FROM COMMUNICATIONS DATA

| DATA | ROTATION ANGLE |
|------|----------------|
| 0 | 0 |
| 1 | $\pi$ |

(1 SYMBOL=1 BIT)

(b) DBPSK

TARGET SYMBOL
OF DIVERSITY

(c) TIME DIVERSITY

# FIG.6

POWER

#20     #40     #60     #80     #100    FREQUENCY

EP 1 075 103 A1

# FIG.7

**■CASE OF ONE REPLACEMENT REQUEST**

PROCESSING EXECUTED
BY VIRTUAL MASTER

VIRTUAL MASTER
PROCESSING START

S1
SELECT PRIMARY
MODULATION SYSTEM
TO BE REPLACED

S2
TRANSMIT
REPLACEMENT
REQUEST COMMAND
(SPECIFYING PRIMARY
MODULATION SYSTEM
TO BE REPLACED)

S3
HAS
PREDETERMINED
PERIOD OF TIME
ELAPSED?  → Yes

No

S4
RECEIVED
REPLACEMENT
REFUSAL
COMMAND?

No

Yes

S5
REPLACEMENT NOT
POSSIBLE. END
VIRTUAL MASTER
PROCESSING

S6
TRANSMIT REPLACEMENT
SPECIFICATION COMMAND
(SPECIFYING
REPLACEMENT PRIMARY
MODULATION SYSTEM)

S7
REPLACE OWN PRIMARY
MODULATION SYSTEM

REPLACEMENT
COMPLETE.
VIRTUAL MASTER
PROCESSING END

---

PROCESSING EXECUTED
BY ALL DEVICES OTHER
THAN VIRTUAL MASTER

RECEIVE
REPLACEMENT
REQUEST COMMAND   S11

S12
DETERMINE
POSSIBILITY OF
REPLACEMENT

S13
REPLACEMENT
OK?   → Yes

No

S14
TRANSMIT
REPLACEMENT
REFUSAL COMMAND

S15
REPLACEMENT
REFUSAL
COMMAND FROM
OTHER DEVICES
RECEIVED?   → Yes

No

S16
REPLACEMENT
SPECIFICATION
COMMAND
RECEIVED?   → No

Yes

S17
REPLACE PRIMARY
MODULATION
SYSTEM

END

ALL THE
DEVICES
CHANGE
THE TONE

# FIG.8

∎N NUMBER OF REPLACEMENT REQUESTS

```
┌───────────── PROCESSING EXECUTED BY VIRTUAL MASTER ─────────────┐

                    START VIRTUAL
                  MASTER PROCESSING

                                               ⌐ S1
               SELECT PRIMARY MODULATION
                 SYSTEM TO BE REPLACED

                                               ⌐ S21
                  RESET COUNTER N,
                   RESET TIMER T

                                               ⌐ S2
                TRANSMIT REPLACEMENT
                  REQUEST COMMAND
                 (SPECIFYING PRIMARY
               MODULATION SYSTEM TO BE
                     REPLACED)

                                               ⌐ S3
                                HAS
          Yes          PREDETERMINED PERIOD
                          OF TIME ELAPSED?

                ⌐ S22                    No
       COUNTER N = N + 1,                               ⌐ S4
         RESET TIMER T                        RECEIVED           No
                                         REPLACEMENT REFUSAL
                      ⌐ S23                   COMMAND?
  Yes                                          Yes
             N < n ?                                    ⌐ S5
                                          REPLACEMENT NOT
              No           ⌐ S24             POSSIBLE.
     RETRANSMIT REPLACEMENT               END VIRTUAL MASTER
        REQUEST COMMAND                      PROCESSING
       (SPECIFYING PRIMARY
     MODULATION SYSTEM TO
         BE REPLACED)

                                                       ⌐ S6
                                        TRANSMIT REPLACEMENT
                                        SPECIFICATION COMMAND
                                        (SPECIFYING REPLACEMENT
                                       PRIMARY MODULATION SYSTEM)

                                                       ⌐ S7
                                        REPLACE OWN PRIMARY
                                         MODULATION SYSTEM
                                        REPLACEMENT COMPLETE

                                          REPLACEMENT
                                            COMPLETE.
                                         VIRTUAL MASTER
                                         PROCESSING END
```

28

■N NUMBER OF REPLACEMENT REQUESTS

# FIG.9

PROCESSING EXECUTED BY ALL
DEVICES OTHER THAN VIRTUAL MASTER

RECEIVE REPLACEMENT
REQUEST COMMAND — S11

RESET TIMER T — S31

DETERMINE POSSIBILITY
OF REPLACEMENT — S12

S13
REPLACEMENT OK? — Yes

No

S15
REPLACEMENT
REFUSAL COMMAND FROM
OTHER DEVICES
RECEIVED? — Yes

No

TRANSMIT REPLACEMENT
REFUSAL COMMAND — S14

Yes

S32
HAS
PREDETERMINED
PERIOD OF TIME
ELAPSED?

No

S33
RECEIVED
REPLACEMENT
SPECIFICATION
COMMAND? — No

Yes

S34
HAS
PREDETERMINED
PERIOD OF TIME
ELAPSED?

S16
RECEIVED
REPLACEMENT
SPECIFICATION
COMMAND? — No

Yes

S35
REPLACEMENT
REQUEST COMMAND
RECEIVED
AGAIN? — No

Yes

REPLACE PRIMARY
MODULATION
SYSTEM — S17

S36
REPLACEMENT
REFUSAL COMMAND
FROM OTHER DEVICES
RECEIVED? — Yes

No

RETRANSMIT
REPLACEMENT REFUSAL
COMMAND — S37

END

# FIG.10

EP 1 075 103 A1

(a)

TONE No.

#0 #1 #2 #3 #4 #5 ........ #99 #100

#32    #48    #64    #80    #96
f (FREQUENCY)

(b)

| TONE GROUP NO. | NUMBER OF TONES FORMING TONE GROUP |
|---|---|
| TONE GROUP (0) | #32, #48, #64, #80, #96 |
| TONE GROUP (1) | #31, #47, #63, #79, #95 |
| (OMITTED) | (OMITTED) |
| TONE GROUP (14) | #18, #34, #50, #66, #82 |
| TONE GROUP (15) | #17, #33, #49, #65, #81 |

⬅ DEFAULT TONE GROUP

# FIG.11

(a)

LOW    MIDDLE    HIGH

#32    #48    #64    #80    #96

f (FREQUENCY)

(b)

| SET POSITION | NUMBER OF TONES FORMING SET POSITION (FOR TONE GROUP 0) |
|---|---|
| LOW | #32, #48, #64 |
| MIDDLE | #48, #64, #80 |
| HIGH | #64, #80, #96 |

⬅ DEFAULT SET POSITION

EP 1 075 103 A1

# FIG.12

TRANSMISSION PATH 7

TRANSMITTED DATA → FRAMING CIRCUIT 1 → PRIMARY MODULATOR 2 → TONE SELECTOR 3 → IFFT 4 → P/S 5 → D/A 6

TRANSMISSION CONTROL CODE

PRIMARY MODULATION SYSTEM SELECTION INFORMATION

DUMMY CARRIER CREATING DEVICE 18

TONE SELECTION INFORMATION

10 ~ CONTROL CIRCUIT

NOISE INFORMATION

NOISE MEASURING DEVICE 9

COUPLING CIRCUIT 8

CARRIER DETECTION INFORMATION

CARRIER DETECTING DEVICE 17

RECEIVE CONTROL CODE

PRIMARY DEMODULATION SYSTEM SELECTION INFORMATION

RECEIVED DATA ← DEFRAMING CIRCUIT 11 ← PRIMARY DEMODULATOR 12 ← TONE SELECTOR 13 ← FFT 14 ← S/P 15 ← A/D 16

EP 1 075 103 A1

32

# FIG.13

SYNCHRONISM CODE

WITH CP

| PREAMBLE | | FRAME LENGTH | HOUSE CODE | POC | R-S | DATA FIELD |
|---|---|---|---|---|---|---|

| PREAMBLE: TRANSMIT FIXED DATA FOR SYMBOL SYNCHRONISM, TRANSMIT DATA "2" TO ALL TONES | SYNCHRONISM CODE: TRANSMIT PRESET EXISTING DATA | FRAME LENGTH: INFORMATION RELATING TO FRAME LENGTH | HOUSE CODE: DATA FOR IDENTIFYING HOUSE | POC: TRANSMIT CONTROL COMMANDS TO BE USED AT PHYSICAL LAYER |
|---|---|---|---|---|
| 16 SYMBOL | 16 BIT | 8 BIT | 64 BIT | 16 BIT |

FRAME FORMAT

EP 1 075 103 A1

# FIG.14

| COMMUNICATIONS MODE 2 BIT | COMMAND 2 BIT | COMMAND EXTENSION NUMBER 6 BIT | PREPARATORY 4 BIT |
|---|---|---|---|

POC CONSTITUTION

EP 1 075 103 A1

# FIG.15

CONTROL COMMAND LIST

COMMUNICATIONS MODE FIELD

| COMMUNICATIONS MODE (2 BIT) | MODE 1 | [00] |
|---|---|---|
| | MODE 2 | [01] |
| | MODE 3 | [10] |
| | RESERVED | [11] |

COMMAND/COMMAND EXTENSION NUMBER FIELD
(FOR MODE 1, OTHERS RESERVED)

| COMMAND (4 BIT) | | COMMAND EXTENSION NUMBER |
|---|---|---|
| | | TONE POSITON INFORMATION (TONE GROUP : 4 BIT, SET POSITION : 2 BIT) |
| [0000] | TONE REPLACEMENT REQUEST | DESIRED TONE [sssspp] |
| [0001] | TONE REPLACEMENT REFUSAL | NONE |
| [0010] | TONE REPLACEMENT SPECIFICATION | REPLACEMENT TONE [sssspp] |
| [0011] | TONE REPLACEMENT INQUIRY | NONE |
| [0100] | TONE REPLACEMENT RESPONSE | PRESENT TONE [sssspp] |
| | | PRIMARY MODULATION SYSTEM (6 BIT) |
| [0101] | PRIMARY MODULATION SYSTEM REPLACEMENT REQUEST | DESIRED PRIMARY MODULATION SYSTEM [xxxxxx] |
| [0110] | PRIMARY MODULATION SYSTEM REPLACEMENT REFUSAL | NONE |
| [0111] | PRIMARY MODULATION SYSTEM REPLACEMENT SPECIFICATION | REPLACEMENT PRIMARY MODULATION SYSTEM [xxxxxx] |
| [1000] | PRIMARY MODULATION SYSTEM REPLACEMENT INQUIRY | NONE |
| [1001] | PRIMARY MODULATION SYSTEM REPLACEMENT RESPONSE | PRESENT PRIMARY MODULATION SYSTEM [xxxxxx] |
| [1010] | RESERVED | RESERVED |
| [1011] | RESERVED | RESERVED |
| [1100] | RESERVED | RESERVED |
| [1101] | RESERVED | RESERVED |
| [1110] | DUMMY | PRESENT TONE [sssspp] |
| [1111] | NOP | NONE |

SHOWS TONE GROUP NUMBERS NO. 0 TO NO. 15 AT 4 BIT TONE GROUP POSITION OF TONE POSITION INFORMATION.
SET POSITION 2 BIT OF TONE POSITION INFORMATION IS "00" = MIDDLE , "01"=LOW, "10"=HIGH, "11"=RESERVED.
PRIMARY MODULATION SYSTEM:
"000000"=DQPSK, "000001"=DBPSK, "000002"=DBPSK+TIME DIVERSITYS

# FIG.16

| COMMUNICATIONS MODE 2 BIT | COMMAND 3 BIT | SUB COMMAND 2 BIT | COMMAND EXTENSION NUMBER 6 BIT | PREPARATORY 3 BIT |
|---|---|---|---|---|

POC CONSTITUTION

EP 1 075 103 A1

CONTROL COMMAND LIST/
COMMUNICATIONS MODE FIELD

# FIG.17

| COMMUNICATIONS MODES (2 BIT) | MODE 1 | [00] |
| | MODE 2 | [01] |
| | MODE 3 | [10] |
| | RESERVED | [11] |

COMMAND/COMMAND EXTENSION NUMBER FIELD
(FOR MODE 1, OTHERS RESERVED)

| COMMAND (3 BIT) | SUBCOMMAND (2 BIT) | COMMAND EXTENSION NUMBER |
|---|---|---|
| | | TONE POSITION INFORMATION (TONE GROUP : 4 BIT, SET POSITION : 2 BIT) |
| TONE REPLACEMENT [000] | REQUEST [00] | DESIRED TONE [sssspp] |
| | REFUSAL [01] | NONE |
| | RESERVED [10] | DESIRED TONE [sssspp] |
| | RESERVED [11] | NONE |
| TONE VERIFICATION [001] | INQUIRY [00] | NONE |
| | RESPONSE [01] | PRESENT TONE [sssspp] |
| | RESERVED [10] | NONE |
| | RESERVED [11] | NONE |
| | | PRIMARY MODULATION SYSTEM(6 BIT) |
| PRIMARY MODULATION REPLACEMENT [010] | REQUEST [00] | DESIRED PRIMARY MODULATION SYSTEM [xxxxxx] |
| | REFUSAL [01] | NONE |
| | RESERVED [10] | DESIRED PRIMARY MODULATION SYSTEM [xxxxxx] |
| | RESERVED [11] | NONE |
| PRIMARY MODULATION SYSTEM VERIFICATION [011] | INQUIRY [00] | NONE |
| | RESPONSE [01] | PRESENT PRIMARY MODULATION SYSTEM [xxxxxx] |
| | RESERVED [10] | NONE |
| | RESERVED [11] | NONE |
| RESERVED [100] | RESERVED [YY] | RESERVED [yyyyyy] |
| RESERVED [101] | RESERVED [YY] | RESERVED [yyyyyy] |
| RESERVED [110] | RESERVED [YY] | RESERVED [yyyyyy] |
| ARTIFICIAL COMMAND [111] | NOP [00] | NONE |
| | DUMMY [01] | PRESENT TONE [sssspp] |
| | RESERVED [10] | NONE |
| | RESERVED [11] | NONE |

SHOWS TONE GROUP NUMBERS NO. 0 TO NO. 15 AT 4 BIT TONE GROUP POSITION OF TONE POSITION INFORMATION.
SET POSITION 2 BIT OF TONE POSITION INFORMATION IS "00" = MIDDLE , "01"=LOW, "10"=HIGH, "11"=RESERVED.
PRIMARY MODULATION SYSTEM:
  "000000"=DQPSK, "000001"=DBPSK, "000002"=DBPSK+TIME DIVERSITYS

## CONTROL COMMAND LIST
## COMMUNICATIONS MODE FIELD  FIG.18

| COMMUNICATIONS MODES (2 BIT) | MODE 1 | [00] |
|---|---|---|
| | MODE 2 | [01] |
| | MODE 3 | [10] |
| | RESERVED | [11] |

### COMMAND / COMMAND EXTENSION NUMBER FIELD
### (FOR MODE 1, OTHERS RESERVED)

| COMMAND (3 BIT) | SUBCOMMAND(3 BIT) | COMMAND EXTENSION NUMBER | |
|---|---|---|---|
| | | TONE POSITION INFORMATION (TONE GROUP : 4 BIT, SET POSITION : 2 BIT) | |
| TONE REPLACEMENT /VERIFICATION [000] | REQUEST [000] | DESIRED TONE | [sssspp] |
| | REFUSAL [001] | NONE | |
| | RESERVED [010] | DESIRED TONE | [sssspp] |
| | INQUIRY [011] | NONE | |
| | RESPONSE [100] | PRESENT TONE | [sssspp] |
| | RESERVED [101] | RESERVED | [yyyyyy] |
| | RESERVED [110] | RESERVED | [yyyyyy] |
| | RESERVED [111] | RESERVED | [yyyyyy] |
| | | PRIMARY MODULATION SYSTEM (6 BIT) | |
| PRIMARY MODULATION REPLACEMENT/ VERIFICATION [000] | REQUEST [000] | DESIRED PRIMARY MODULATION SYSTEM REPLACEMENT | [xxxxxx] |
| | REFUSAL [001] | NONE | |
| | RESERVED [010] | DESIRED PRIMARY MODULATION SYSTEM REPLACEMENT | [xxxxxx] |
| | INQUIRY [011] | NONE | |
| | RESPONSE [100] | PRESENT PRIMARY MODULATION SYSTEM REPLACEMENT | [xxxxxx] |
| | RESERVED [101] | RESERVED | [yyyyyy] |
| | RESERVED [110] | RESERVED | [yyyyyy] |
| | RESERVED [111] | RESERVED | [yyyyyy] |
| RESERVED [010] | RESERVED [YYY] | RESERVED | [yyyyyy] |
| RESERVED [011] | RESERVED [YYY] | RESERVED | [yyyyyy] |
| RESERVED [100] | RESERVED [YYY] | RESERVED | [yyyyyy] |
| RESERVED [101] | RESERVED [YYY] | RESERVED | [yyyyyy] |
| RESERVED [110] | RESERVED [YYY] | RESERVED | [yyyyyy] |
| ARTIFICIAL COMMAND [111] | NOP [000] | NONE | |
| | DUMMY [001] | PRESENT TONE | [sssspp] |
| | RESERVED [010] | RESERVED | [yyyyyy] |
| | RESERVED [011] | RESERVED | [yyyyyy] |
| | RESERVED [100] | RESERVED | [yyyyyy] |
| | RESERVED [101] | RESERVED | [yyyyyy] |
| | RESERVED [110] | RESERVED | [yyyyyy] |
| | RESERVED [111] | RESERVED | [yyyyyy] |

SHOWS TONE GROUP NUMBERS NO. 0 TO NO. 15 AT 4 BIT TONE GROUP POSITION OF TONE POSITION INFORMATION.
SET POSITION 2 BIT OF TONE POSITION INFORMATION IS "00" = MIDDLE, "01"=LOW, "10"=HIGH, "11"=RESERVED.
PRIMARY MODULATION SYSTEM:
"000000"=DQPSK, "000001"=DBPSK, "000002"=DBPSK+TIME DIVERSITYS

# INTERNATIONAL SEARCH REPORT

| | International application No. |
|---|---|
| | PCT/JP00/00967 |

**A. CLASSIFICATION OF SUBJECT MATTER**
Int.Cl⁷ H04J11/00, H04L29/06

According to International Patent Classification (IPC) or to both national classification and IPC

**B. FIELDS SEARCHED**

Minimum documentation searched (classification system followed by classification symbols)
Int.Cl⁷ H04J11/00, H04L29/06, H04B3/54

Documentation searched other than minimum documentation to the extent that such documents are included in the fields searched
Jitsuyo Shinan Koho(Y1,Y2) 1926-2000 Toroku Jitsuyo Shinan Koho(U) 1994-2000
Kokai Jitsuyo Shinan Koho(U) 1971-2000 Jitsuyo Shinan Koho(Y2) 1996-2000

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | GB, 2303032, A (SAMSUNG ELECTRONICS CO LTD), 05 February, 1997 (05.02.97) & JP, 9-51328, A & IL, 118723, A & FR, 2736229, A1 & KR, 97004285, A | 1-13 |
| A | JP, 10-247955, A (Yuseisho Tsushin Sogo Kenkyusho), 14 September, 1998 (14.09.98) (Family: none) | 1-13 |
| A | EP, 820168, A2 (TEXAS INSTRUMENTS INC), 21 January, 1998 (21.01.98) & JP, 10-154949, A & TW, 345791, A & KR, 98013165, A | 1-13 |

☐ Further documents are listed in the continuation of Box C. ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>30 May, 2000 (30.05.00) | Date of mailing of the international search report<br>13.06.00 |
|---|---|
| Name and mailing address of the ISA/<br>Japanese Patent Office | Authorized officer |
| Facsimile No. | Telephone No. |

Form PCT/ISA/210 (second sheet) (July 1992)